Europäisches Patentamt

European Patent Office

Office européen des brevets

(19)

(11) Veröffentlichungsnummer: **0 156 339 B1**

(12) **EUROPÄISCHE PATENTSCHRIFT**

(45) Veröffentlichungstag der Patentschrift: 24.07.91

(51) Int. Cl.5: **H04Q 11/04**

(21) Anmeldenummer: **85103465.2**

(22) Anmeldetag: **23.03.85**

(54) **Verfahren und Anordnung zum Herstellen und Betreiben einer Zeitvielfach-Breitbandverbindung in einer Zeitvielfach-Vermittlungsstelle.**

(30) Priorität: **26.03.84 US 593342**

(43) Veröffentlichungstag der Anmeldung:
**02.10.85 Patentblatt 85/40**

(45) Bekanntmachung des Hinweises auf die
Patenterteilung:
**24.07.91 Patentblatt 91/30**

(84) Benannte Vertragsstaaten:
**CH DE FR GB LI NL**

(56) Entgegenhaltungen:
**DE-A- 2 214 216**

**ELECTRICAL COMMUNICATION, Band 59, Nr. 1/2, 1985, Seiten 131-136, ITT Corp., Heidenheim, DE; S.R. TREVES et al.: "System 12, technique for wideband ISDN applications"**

(73) Patentinhaber: **ALCATEL N.V.**
**Strawinskylaan 537 (World Trade Center)**
**NL-1077 XX Amsterdam(NL)**

(72) Erfinder: **Upp, Daniel Clay**
**15 Pepper Tree Hill Lane**
**Southbury, CT 06488(US)**

(74) Vertreter: **Villinger, Bernhard, Dipl.-Ing. et al**
**Standard Elektrik Lorenz AG Patent- und Lizenzwesen Postfach 30 09 29**
**W-7000 Stuttgart 30(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 156 339 B1

## Beschreibung

Die Erfindung betrifft ein Verfahren, eine Vermittlungsstelle und ein Ausgangsmodul für eine Vermittlungsstelle zum Herstellen und Betreiben einer Zeitvielfach-Breitbandverbindung.

Bei vorgegebener Bandbreite der einzelnen Zeitvielfach-Verbindungen kann damit die für den einzelnen Teilnehmer verfügbare Bandbreite erhöht werden. Die Erfindung wird am Beispiel einer Vermittlungsstelle mit verteilter Steuerung beschrieben, ist jedoch auf jede Vermittlungsstelle anwendbar, bei der einzelne Zeitvielfachkanäle mit gegebener Bandbreite geschaltet werden.

Ein Vermittlungssystem mit verteilter Steuerung stellt eine neue Architektur für Vermittlungssysteme dar. In dieser Architektur gibt es keine besondere Steuereinheit oder einen zentralen Computerkomplex, weil die Steuerung für das ganze System in Form vieler einzelner Prozessoren über die einzelnen Untersysteme verteilt ist, wobei die einzelnen Prozessoren die erforderlichen Steuerfunktionen für die jeweiligen Untersysteme ausführen.

Gruppen von Steuerfunktionen für einzelne Untersysteme werden von Prozessoren ausgeführt, die diesen Untersystemen zugeordnet sind; es gibt jedoch auch andere Steuerfunktionen in denselben Untersystemen, die effektiver durch besondere Prozessoren ausgeführt werden. Ein Beispiel für ein solches System ist im US-Patent 4,201,890 mit dem Titel "Multi-port digital switching element" am 6. Mai 1980 veröffentlicht. Außerdem wird auf die US-Patente 4,201,891 mit dem Titel "Expandable digital switching network" und 4,201,889 mit dem Titel "Distributed control digital switching system" verwiesen. Der wesentliche Inhalt der genannten drei US-Patenschriften ist auch in der Deutschen Offenlegungsschrift 29 09 762 enthalten.

Dieses System ist so aufgebaut, daß nicht nur PCM-Sprachproben oder Daten zwischen zwei Anschlußteilen durch das Koppelnetzwerk in Zeitvielfachkanälen übertragen werden; in denselben Kanälen werden vielmehr auch Steuersignale für die verteilte Steuerung und Wegesuchsignale übertragen. Jeder Anschlußteil- ob für Teilnehmerleitungen, für Verbindungsleitungsbündel oder für andere Datenquellen- ist mit einer Anschlußeinheit verbunden, die alle Einrichtungen enthält, die erforderlich sind, um über andere Anschlußeinheiten mit anderen Anschlußteilen zu kommunizieren und um zu diesen anderen Anschlußeinheiten Wege durch das Koppelnetzwerk aufzubauen, zu halten und wieder abzubauen. Auch die Verbindung der Prozessoren untereinander erfolgt über das Koppelnetzwerk. Ein Hauptkoppelfeld, das Koppelelemente mit Raum- und Zeitkoppelmöglichkeiten aufweist, ist so aufgebaut, daß es ohne weiteres modular erweiterbar ist.

Ein solches System, das in den genannten Patenten beschrieben ist und auch schon mehrfach realisiert ist, entspricht die Bandbreite eines Kanals einer Übertragungsgeschwindigkeit von 64 kBit/s. Ohne zusätzliche Maßnahmen ist es nicht möglich, mehrere solcher Kanäle zusammenzufassen, um die Bandbreite zu erhöhen. Dies ist deshalb der Fall, weil der Mechanismus des Verbindungsaufbaus keine Rahmenintegrität bei mehreren Verbindungen zwischen zwei Anschlußeinheiten gewährleistet. Daten, die auf verschiedenen Wegen zwischen zwei Anschlußeinheiten übertragen werden, weisen unterschiedliche Laufzeiten auf, so daß sich am Ausgang gegenseitige Verschiebungen ergeben. Hier liegt eine große Schwierigkeit, wenn die Bandbreite eines solchen Systems erhöht werden soll. Der normale Verbindungsaufbau in einem solchen System erfolgt für jede Richtung getrennt, wobei ein Hardwarealgorithmus dafür sorgt, daß die Zeitverzögerung minimiert wird. Weil aber immer schon andere Verbindungen aufgebaut sind, wird sich für jeden Verbindungsweg eine andere Verzögerung ergeben. Dadurch bedingt wird das Wort am Ausgang falsch geliefert. Daraus ergibt sich , wie noch ausführlicher gezeigt wird, ein Rahmenintegritätsproblem, das zur Folge hat, daß die Ausgangsdaten, wie oben erwähnt, gegeneinander verschoben werden.

Der Erfindung liegt deshalb die Aufgabe zugrunde, Möglichkeiten zum Aufbau mehrkanaliger Verbindungen anzugeben, bei denen Verbindungen mit Bandbreiten entsprechend n mal 64 kBit/s durch die Vermittlungsstelle möglich sind. Dabei muß vor allem das Rahmenintegritätsproblem gelöst werden.

Die Aufgabe wird gelöst durch ein Verfahren nach der Lehre des Hauptanspruchs. Daraus resultiert eine Vermittlungsstelle mit einem Aufbau gemäß der Lehre des Anspruchs 9. Das Rahmenintegritätsproblem wird durch einen darin enthaltenen Ausgangsmodul nach der Lehre des Anspruchs 21 gelöst. Vorteilhafte Ausgestaltungen der Erfindung sind den Unteransprüchen zu entnehmen.

Im folgenden wird die Erfindung anhand eines Ausführungsbeispiels unter Zuhilfenahme der beiliegenden Zeichnungen weiter erläutert.

| | |
|---|---|
| Figur 1 | ist ein einfaches Blockdiagramm einer Vermittlungsstelle mit verteilter Steuerung, bei der die Erfindung angewendet wird. |
| Figur 2 | ist ein einfaches Diagramm zur Darstellung des Rahmenintegritätsproblems bei einer Vermittlungsstelle nach Figur 1. |
| Figur 3 | zeigt ein einfaches Blockschaltbild eines Ausgangsmoduls, das die Rahmenintegrität bei mehrkanaligen Breitbandverbindungen ge- |

währleistet.

Figur 4      zeigt detailliertere Ausschnitte aus Figur 3.

Figur 5      zeigt ein Blockschaltbild eines der in Figur 3 und 4 gezeigten Rahmenzuordnungsspeicher.

Figur 6      zeigt ein Zeitdiagramm für die Einschreiboperationen bei dem in Figur 5 gezeigten Rahmenzuordnungsspeicher.

Figur 7      zeigt detaillierte Ausschnitte aus Figur 6.

Figur 8      zeigt ein Zeitdiagramm für eine Suchoperation in einem Ausgangsmodul nach Figur 3.

Figur 9      zeigt detaillierte Ausschnitte aus Figur 8.

Figur 10     zeigt ein Zeitdiagramm für eine Leseoperation.

Figur 11     zeigt das Zeitdiagramm einer Datenausgabe.

Figur 12     zeigt eine Tabelle, in der die in den Zeitdiagrammen auftretenden Zeiten spezifiziert sind.

Figur 13     zeigt verschiedene Wortformate, darunter das Format eines Breitbandworts.

Figur 14     zeigt ein Blockschaltbild eines in Figur 1 gezeigten Breitbandmoduls WBM.

Figur 15a    zeigt ausschnittsweise ein Blockschaltbild eines Assoziativspeichers mit den Teilen, die an einer Einschreiboperation beteiligt sind.

Figur 15b    zeigt ausschnittsweise ein Blockdiagramm desselben Assoziativspeichers, jedoch mit den Teilen, die am assoziativen Auslesen beteiligt sind.

Die vorliegende Erfindung wird anhand eines Ausführungsbeispiels beschrieben, dem die in der DE-OS 29 09 762 beschriebene Fernmeldevermittlungsanlage zugrundeliegt. Damit wird jedoch die Anwendung der vorliegenden Erfindung auf andersartige Fernmeldevermittlungsanlagen nicht ausgeschlossen.

Es erscheint zweckmäßig, die genannte Fernmeldevermittlungsanlage kurz zu beschreiben, um die vorliegende Erfindung und das ihr zugrundeliegende technische Problem besser zu verstehen.

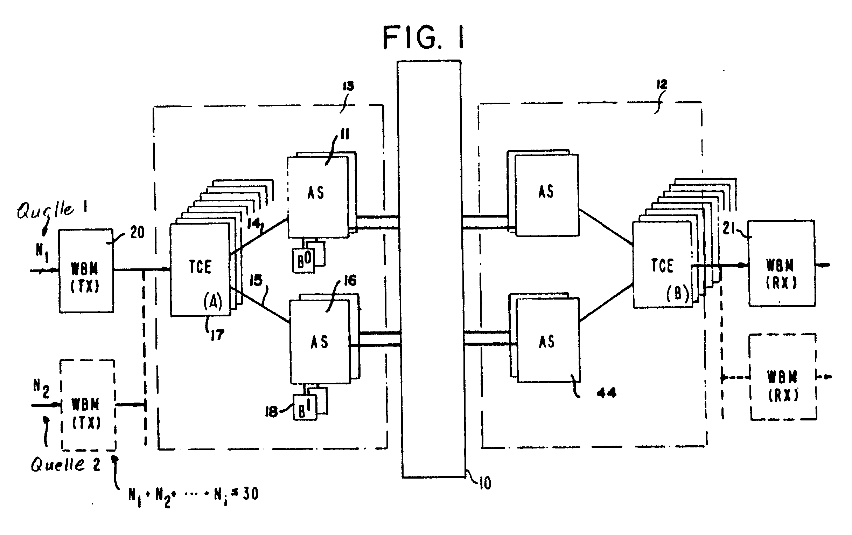

Figur 1 zeigt ein einfaches Blockschaltbild einer Fernmeldevermittlungsanlage mit verteilter Steuerung. Es enthält ein Koppelnetzwerk 10, auch Hauptkoppelfeld genannt, in dem eine Vielzahl von Verbindungen zwischen Anschlußeinheiten herstellbar sind, um übertragungswege zur Verfügung zu stellen für Datenübertragung zwischen Anschlußteilen, die an diese Anschlußeinheiten angeschlossen sind.

Ein Anschlußmodul ist ein Untersystem, an dem eine Gruppe von Anschlußteilen angeschlossen ist, die an einem Paar von Zugangskoppelfeldern AS angeschlossen sind.

Jede Anschlußeinheit enthält eine Mehrzahl von Zugangskoppetfeldern AS, beispielsweise die Zugangskoppelfelder 11, 16 und 44. Im Beispiel enthält jede Anschlußeinheit vier Zugangseinheiten AS, durch die der Datenaustausch zwischen Koppelnetzwerk 10 und den an den Anschlußeinheiten angeschlossenen Geräten in beiden Richtungen bewirkt wird. Der Einfachheit halber ist eine Empfangsanschlußeinheit 12 und eine Sendeanschlußeinheit 13 gezeigt. An jede Anschlußeinheit können 1920 Teilnehmeranschlußgeräte oder 480 Leitungsbündel angeschlossen werden. Ein Anschlußmodul besteht aus einem Paar von Zugangskoppelfeldern, beispielsweise 11 und 16, bis zu acht Modulsteuereinheiten TCE, beispielsweise 17, je nach Bedarf Mikroprozessoren B, beispielsweise 18, und Anschlußteilen, beispielsweise 20 oder 21. Die Anschlußteile 20 und 21 im vorliegenden Beispiel verbinden jeweils 30 bidirektionale Teilnehmeranschlußleitungen mit der jeweiligen Anschlußeinheit.

Jede Anschlußeinheit, beispielsweise die Empfangsanschlußeinheit 12, ist mit dem Koppelnetzwerk 10 über eine Vielzahl von Zeitmultiplexleitungen verbunden. Jede Zeitmultiplexleitung besteht aus zwei unidirektionalen übertragungswegen. Jede Modulsteuereinheit TCE ist mit zwei Zugangskoppelfeldern AS über zwei derartige Zeitmultiplexleitungen verbunden, die ebenfalls im genannten Patent gezeigt sind.

Wie bereits erwähnt, ist jede Übertragungsleitung, die eine Verbindung zu einer Zugangseinheit AS herstellt, bidirektional; sie enthält ein Paar unidirektionaler übertragungswege, wobei jedem Übertragungsweg eine Richtung des Datenflußes zugeordnet ist. Jeder unidirektionale Übertragungsweg enthält 32 Kanäle, die im Zeitmultiplex (TDM) in bitseriellem Format digitale Informationen enthalten. Jeder Zeitmultiplexrahmen enthält 32 Kanäle, wobei jeder Kanal 16 Informationsbits beträgt. Die Bitfolgefrequenz entspricht 4096kBit/s. Diese Bitfolgefrequenz wird im ganzen System durch ein gemeinsames Taktsignal sichergestellt. Das System kann deshalb als bitfrequenzsynchron bezeichnet werden. Bezüglich der Phase ist das System asynchron. Es wird deshalb keine bestimmte Phase gefordert, mit der die Datenbits in einem Rahmen an verschiedenen Koppelelementen oder an verschiedenen Eingängen eines einzelnen Koppelelements anstehen müssen. Dieses frequenzsynchrone und phasenasynchrone Koppelsystem ist im Koppelnetzwerk 10 und in den Zugangskoppelfeldern AS, beispielsweise dem Zugangskoppelfeld 11, durch eine Vielzahl von Koppelnetzbausteinen realisiert.

Diese Koppelnetzbausteine sind ebenfalls im genannten Patent ausführlich beschrieben. Der Koppelnetzbaustein wirkt als Zeitkoppelstufe mit 32 Kanälen und als Raumkoppelstufe mit 16 Ein- und Ausgängen. Von den 16 Bits eines Datenworts können bis zu 14 Bits Nutzinformation enthalten, die restlichen zwei Bits werden als Kontrollbits verwendet, um den Datentyp in den übrigen 14 Bits des Kanals zu kennzeichnen. Ein solcher Koppelnetzbaustein kann beispielsweise zur Vermittlung von PCM-Abtastwerten mit 14 Bit und linearer Codierung, für PCM-Abtastwerte mit 13 Bit und linearer Codierung, für PCM-Abtastwerte mit 8 Bit oder für Datenbytes aus 8 Bit verwendet werden.

Jeder Anschlußmodul enthält also 2 Gruppen von Prozessoren. Beispielsweise ist in jeder Modulsteuereinheit TCE, beispielsweise in der Modulsteuereinheit 17, ein Prozessor enthalten, der jeweils einer eigenen Gruppe von Anschlußteilen zugeordnet ist. Die Zugangseinheit einer solchen Gruppe ist durch ein Paar bidirektionaler Zwischenleitungen, beispielsweise durch die bidirektionalen Zwischenleitungen 14 und 15 bei der Modulsteuereinheit 17, jeweils an zwei Zugangskoppelfelder - AS - beispielsweise die Zugangskoppelfelder 11 und 16, angeschlossen. Die Zugangskoppelfelder AS ermöglichen jeweils den Zugang einer Modulsteuereinheit zu einem Paar von Funktionssteuereinheiten ACE, beispielsweise den aus den Prozessoren B0 und B1 in der Sendeanschlußeinheit 13 bestehenden Funktionssteuereinheiten. Die Modulsteuereinheiten TCE und die Funktionssteuereinheiten ACE sind jeweils für die Durchführung einer bestimmten Gruppe von Steuerfunktionen zuständig. Der Aufbau der gesamten Vermittlungseinrichtung ist, wie schon erwähnt, in dem oben genannten Patent dargestellt. Bei diesem Vermittlungssystem bilden jeweils 512 serielle Bits einen Rahmen, der in 32 Kanäle mit je 16 Bit aufgeteilt ist. Die Daten, die seriell von den Koppeleinheiten gesendet werden, sind sowohl frequenz- als phasensynchron, da die Sendekontrollogiken und die entsprechendenen Sendekontrollogiken der anderen Ausgänge der Koppelelemente alle mit der gleichen Taktfrequenz von 4096 kBit/s senden und da alle gleichzeitig dieselbe Bitposition eines Rahmens senden.

Andererseits erfolgt der Empfang bitserieller Daten in der Empfangsanschlußeinheit 12 frequenzsynchron nur soweit, als keine bestimmte Beziehung zwischen zwei Bits bestehen muß, die zu einem bestimmten Zeitpunkt an zwei beliebigen Eingängen empfangen werden. Der Empfang ist deshalb phasenasynchron. Die Sendeanschlußeinheit 13 und die Empfangsanschlußeinheit 12 enthalten jeweils ein Kontrollogikteil und einen Speicher mit wahlfreiem Zugriff, wie in der US-Patentschrift 4,201,890 beschrieben ist.

Weiter sind in Figur 1 zwei Breitbandmodule (WBM) 20 und 21 gezeigt, wobei der Breitbandmodul 20 als Sendemodul (TX) und der Breitbandmodul 21 als Empfangsmodul (RX) bezeichnet ist. Dies wird im folgenden weiter ausgeführt. Jeder Breitbandmodul ist zum Herstellen und zum Betreiben von Breitbandverbindungen entsprechend der vorliegenden Erfindung geeignet. Um die Bandbreite zu erhöhen, werden die Daten über die den Anschlußeinheiten zugeordneten Modulsteuereinheiten von einer Vielzahl von Breitbandmodulen gesendet, so daß die von jeder Quelle kommenden Daten über eine mehrkanalige Verbindung geführt werden. Damit wird für jede Verbindung eine Bandbreite entsprechend n x 64 kBit/s erreicht. Die Bandbreite einer einzelnen Verbindung kann einer Übertragungsgeschwindigkeit von $n_a$ x 64 kBit/s entsprechen , solange die Summe aller $n_a$'s 30 nicht übersteigt. Man kann damit, wenn man dieses System benützt, eine wirksame Bandbreite ensprechend bis zu 30 x 64 kBit/s, d.h., bis 1920 kBit/s erreichen.

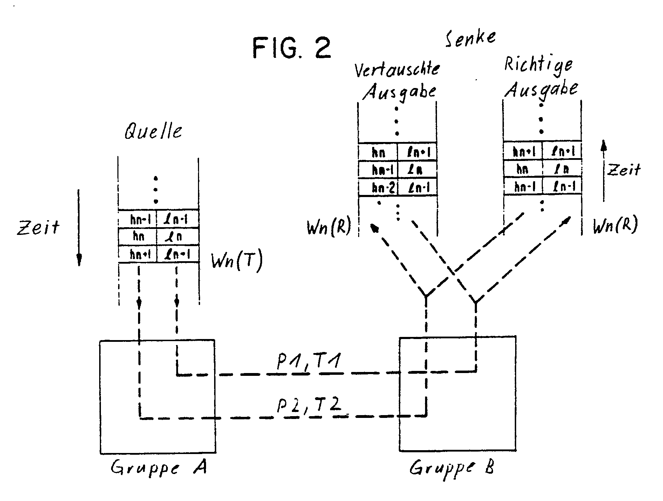

Figur 2 zeigt ein Diagramm, anhand dessen das Problem der Rahmenintegrität in einem solchen Vermittlungssystem erklärt wird.

Gruppe A in Figur 2 stellt eine Gruppe von Anschlußteilen dar, die der Sendeanschlußeinheit 13 zugeordnet sind, während Gruppe B eine Gruppe von Anschlußteilen darstellt, die der Empfangsanschlußeinheit 12 zugeordnet ist. Wie schon angedeutet, werden innerhalb der Koppeleinrichtung normale Verbindungswege getrennt für beide Richtungen aufgebaut. Dies erfolgt entsprechend einem Algorithmus, der die Zeitverzögerung auf dem Verbindungsweg minimiert. Da beim Aufbau der Verbindungswege bereits andere Verbindungen aufgebaut sind, werden die einzelnen Verbindungswege unterschiedliche Verzögerungen aufweisen.

Nun wird, entsprechend Figur 2, angenommen, daß 16-Bit-Worte Wn mit 128 kBit/s zwischen Gruppe A und Gruppe B übertragen werden sollen. Das Low-Byte wird auf einem Weg P1 mit einer Verzögerung T1 zwischen A und B übertragen, während das High-Byte auf einem Weg P2 mit einer Verzögerung T2 übertragen wird. Da A und B, wie schon gezeigt, zueinander asynchron arbeiten, kann die Übertragungszeit des empfangenen, wieder zusammengefügten Wortes, jede beliebige Zeit sein. Unter der Annahme, daß die Weitergabe der Daten kurz nach dem Empfang des neuesten Low-Byte von P1 erfolgt und vorausgesetzt, daß die Verzögerung T2 des High-Bytes geringer ist als die des Low-Bytes, wird ein wieder richtig zusammengesetztes Wort am Ausgang der Vermittlungsstelle abgegeben. Dies ist als "richtige Ausgabe" in Figur 2 gezeigt, wo die Bits des High-Bytes synchron mit den Bits des Low-Bytes sind. Ist dagegen T2 größer als T1, dann wird das ausgegebene Wort verfälscht ausgegeben, und zwar das laufende Low-Byte zusammen mit dem High-Byte des vorangehenden Wortes. Darin liegt das Problem der Rahmenintegrität in diesem System. Das Problem der Rahmenintegrität wird in Figur 2 mit "vertauschte Ausgabe" bezeichnet. Die Lösung, die gezeigt wird, macht davon Gebrauch, daß eine solche Koppeleinrichtung noch ungenutzte Bandbreite aufweist.

Wie schon erwähnt, werden in diesem System tatsächlich Daten übertragen, die aus je 14 Bit bestehen, wobei ein Bit ein Paritätsbit ist. Hierauf aufbauend benützt die im folgenden zu beschreibende Breitbandeinrichtung acht Datenbits mit zusätzlichen Bits in jedem Wort, die Informationen enthalten, mit denen jedes übertragene Signal gekennzeichnet wird. Um das Problem der Rahmenintegrität zu lösen, wird eine Rahmen-(kennzeichnungs) nummer in den unbenützten Bitpositionen in jedem der Wege Pi (beispielsweise P1 und P2 in Figur 2) übertragen.

Die im folgenden beschriebene Schaltung bringt auf der Empfangsseite die empfangenen Werte wieder in Ordnung, um eine korrekte Ausgabe zu erreichen. Die Länge des erforderlichen Rahmenzählers muß lang genug sein, um beim größtmöglichen Unterschied von Verzögerungen in dem im US-Patent 4,201,890 beschriebenen Koppelnetzwerk eine Auflösung zu ermöglichen. Die längste mögliche Verzögerung beträgt nahezu 9 Rahmenlängen und die kürzeste Verzögerung beträgt weniger als eine Rahmenlänge. Da es praktisch unmöglich ist, eine Verzögerung von 9 Rahmenlängen zu erreichen und da jeder Verbindungsaufbau den Algorithmus zum Minimieren der Zeitverzögerung benützt, beträgt die gegenseitige Verschiebung weniger als acht Rahmenlängen.

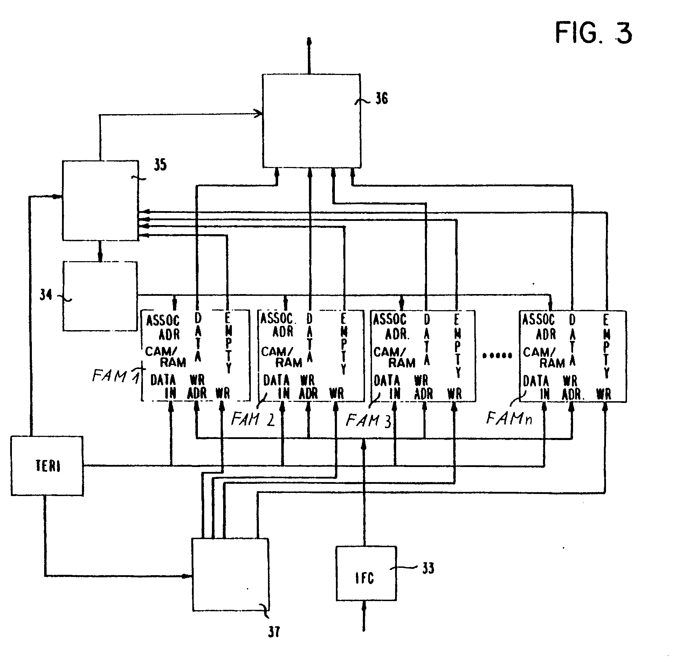

Anhand der Figur 3 wird die Methode zur Lösung dieses Problems dargelegt.

Figur 3 zeigt eine Vielzahl von Assoziativspeichern CAM mit angeschlossenen Speichern mit wahlfreiem Zugriff RAM. Eine solche Kombination wird hier als Rahmenzuordnungsspeicher FAM bezeichnet. Jedem Kanal, der an einer Breitbandverbindung beteiligt sein kann, ist ein Rahmenzuordnungsspeicher zugeordnet (FAM1 ... FAMn). Die Datenbreite eines jeden Rahmenzuordnungsspeichers beträgt 12 Bit, davon sind 8 Bit für Daten, der RAM-Teil, und 4 Bit für die Rahmennummer, der CAM-Teil, Jeder Rahmenzuordnungsspeicher FAM1 bis FAMn kann 8 Worte speichern, dies entspricht der maximal möglichen gegenseitigen Rahmenverschiebung. Jeder Rahmenzuordnungsspeicher ist per Programm einem Empfangskanal der Zugangseinheit TERI des Vermittlungssystems zugeordnet. Das Einschreiben in den Rahmenzuordnungsspeicher erfolgt in eine von einem Eingangsrahmenzähler 33 (IFC) vorgegebene Adresse. Ein Ausgangsrahmenzähler 34 (OFC) wird immer dann weitergezählt, wenn die Zugangseinheit TERI Kanal 31 abgearbeitet hat. Dies ist sicher und zuverlässig, weil im Kanal 0 nie ein Schreibbefehl ausgeführt werden muß. Die von den einzelnen Kanälen kommenden Wörter werden so alle in einen Rahmenzuordnungsspeicher geladen und zwar in einem umlaufenden Muster mit einer Länge von 8 Rahmen.

Ein Assoziativspeicher, ist als solcher wohl bekannt. In einen solchen Speicher wird jedes eingeschriebene Wort am oberen Ende eingegeben und das am längsten nicht benützte Wort verschwindet regelmäßig am unteren Ende, wenn der Speicher überfließt. Von der Struktur her ähnelt ein Assoziativspeicher einem gewöhnlichen Schreibe-Lese-Speicher mit einem zusätzlichen Vergleicher für jedes Bit. Ein Eingangswort, das manchmal als Deskriptor bezeichnet wird, wird an alle Vergleicher gegeben, die diesen Deskriptor mit den gespeicherten Wörtern vergleichen.

Betrieb und Aufbau von Assoziativspeichern sind wohl bekannt. Beispielsweise wird auf eine 1972 bei McGraw Hill erschienene Veröffentlichung von Wallace B. Riley unter dem Titel "Electronic computer memeory technology" verwiesen. In Kapitel 9 auf Seite 209 sind unter der Überschrift "spezical memories" derartige Speicher beschrieben.

Im folgenden wird beschrieben, wie in einem solchen System ein Kanal mit n x 64 kBit/s zwischen einem eingangsseitigen Breitbandmodul 20, in der Zeichnung als WBM(TX) bezeichnet und einem ausgangsseitigen Breitbandmodul 21, in der Figur 1 auch als WBM(RX) bezeichnet, aufgebaut wird. Dies erfolgt durch Aufbau von n einzelnen Verbindungen zwischen dem eingangsseitigen Breitbandmodul 20 und dem ausgangsseitigen Breitbandmodul 21. An jede Modulsteuereinheit TCE können mehrere Breitbandmodule WBM(TX) und WBM(RX) angeschlossen werden.

Unter Berücksichtigung des zuletzt genannten wird erkennbar, daß der Auslese- und Synchronisationsmechanismus, der anhand der Figur 3 gezeigt wird, ganz wirtschaftlich ist. Der Ausgangsrahmenzähler 34, der ein 4-Bit-Zähler ist, liefert die assoziativen Adressen für alle Rahmenzuordnungsspeicher FAM1 bis FAMn und, wie zu sehen ist, wird der Ausgang des Ausgangsrahmenzählers 34 an die Assoziativadresseingänge der Rahmenzuordnungsspeicher FAM1 bis FAMn gegeben. Wenn eine Assoziativadresse eingelegt wird, die eine Rahmennummer ist, dann wird jeder Rahmenzuordnungsspeicher entweder mit einem 8-Bit-Datenwort für diese Rahmennummer antworten oder ein Freizeichen abgeben. Die Freizeichen aller Rahmenzuordnungsspeicher werden an eine Synchronisationssteuereinheit 35 gegeben, die auch von der Zugangseinheit TERI ein Zeitsteuersignal erhält. Das Freisignal besagt, daß für diese Rahmennummer kein Wort im Rahmenzuordnungsspeicher ist. Bei der Initialisierung, d.h., wenn das System nicht mehr synchron arbeitet, wird der Ausgangsrahmenzähler 34 von der Synchronisationssteuereinheit 35 aus weitergezählt und alle Rahmenzuordnungsspeicher werden abgefragt, ob sie eine Information mit der Rahmennummer 1 enthalten. Wenn irgendein Rahmenzuordnungsspeicher keine Information mit der Rahmennummer 1 enthält, wird der Ausgangsrahmenzähler 34 weitergezählt und alle Rahmenzuordnungsspeicher werden erneut abgefragt. Dies erfolgt sehr schnell, und zwar solange, bis alle Rahmenzuordnungsspeicher kein Freizeichen anzeigen.

An deser Stelle wird die Suche des Ausgangsrahmenzählers 34 abgebrochen. Die der vom Ausgangsrahmenzähler 34 angezeigten Rahmennummer entsprechenden Bytes in jedem Rahmenzuordnungsspeicher werden zu einem Ausgangswort zusammengefügt. Dies ist die Information von jedem Rahmenzuordnungsspeicher, wobei die Daten aller Rahmenzuordnungsspeicher in einem Ausgangsregister 36 zusammengefügt werden; danach wird der Ausgangsrahmenzähler 34 am Ende eines in der Zugangseinheit TERI verarbeiteten Kanals 31 weitergezählt, um das nächste auszugebende Wort zu holen. Solange alle Rahmenzuordnungsspeicher kein Freizeichen abgeben, ist bei jedem ausgegebenen Wort die Rahmenintegrität gesichert. Das Auftreten oder das Fortbestehen eines Freizeichens bei irgendeinem Rahmenzuordnungsspeicher FAM1 bis FAMn zeigt den Verlust der Rahmenintegrität an und führt dazu, daß neu synchronisiert wird. Wie im folgenden gezeigt wird, können die Rahmenzuordnungsspeicher so gesteuert werden, daß sichergestellt ist, daß der Inhalt des Ausgangsrahmenzählers 34 gleich der niedrigsten Rahmennummer ist, die gerade in allen Rahmenzuordnungsspeichern auftritt. Die in die Rahmenzuordnungsspeicher eingegebenen Daten kommen von der Zugangseinheit TERI und werden über den jeweiligen Dateneingang des Rahmenzuordnungsspeichers in diesen eingeschrieben. Von der Zugangseinheit TERI aus wird über ein Register 37 eine Kanalzuordnungssteuerung durchgeführt Dadurch werden in alle Rahmenzuordnungsspeicher die richtigen Daten eingeschrieben.

Der Eingangsrahmenzähler 33 erzeugt, wie gezeigt, zyklisch die Einschreibadressen für jeden Rahmenzuordnungsspeicher. Die eingeschriebenen Daten kommen von der Zugangseinheit TERI. Eine Vorrichtung und ein Verfahren zum Herstellen und Betreiben von Breitbandverbindungen in einem Vermittlungssystem mit verteilten Steuerungen arbeitet im wesentlichen so, daß das ankommende Signal zunächst in Blöcke geteilt wird, die mit einer Rahmenwiederholfrequenz von 8 kHz gesendet werden (sofern das Signal nicht bereits in solchen Blöcken vorliegt), und dann in eine Reihe von Bytes mit je 8 Bit aufgeteilt wird. In diesem System wird jedes der n Bytes mit einer aus 4 Bit bestehenden Nummer q gekennzeichnet, wobei q bei jedem Rahmen um 1 erhöht wird (Modulo 16). Wie gezeigt wird, wird diese Kennzeichnungsnummer in freie Bitstellen 4, 3, 2 und 1 des durch die Koppeleinrichtung zu übertragenden 16-Bit-Worts eingefügt. Dann wird jedes Byte auf einem unabhängig aufgebauten Weg durch das Koppelnetz geführt. Weil auf jedem Weg ein Byte pro Rahmen übertragen wird, ergeben sich bei n gleichzeitig aufgebauten Wegen n Bytes pro Rahmen oder n X 64 kBit/s. Die gegenseitigen Zeitverschiebungen, die sich durch die unterschiedlichen Zeitverzögerungen auf den unterschiedlichen Wegen ergeben, werden auf der Ausgangsseite durch die in Figur 3 gezeigte Schaltung wieder aufgelöst.

Diese Schaltung fügt automatisch diejenigen n Bytes wieder zusammen, die die gleiche Rahmennummer tragen und erzeugt so eine Breitbandverbindung.

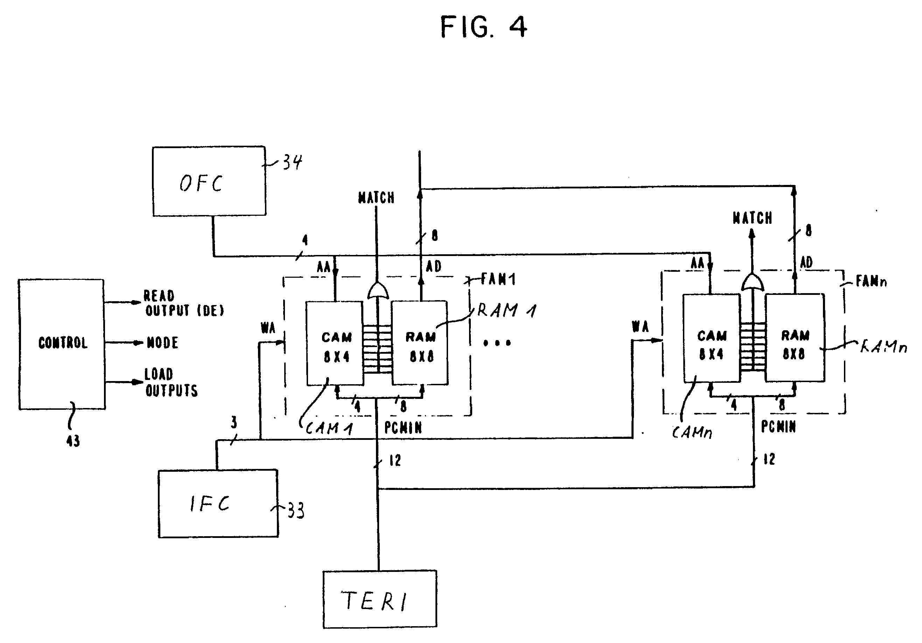

In Figur 4 ist die anhand der Figur 3 beschriebene Schaltung zum Zuordnen von Inhalten verschiedener Kanäle zu einem Rahmen in einem detaillierten Blockschaltbild dargestellt. Wie in Figur 4 gezeigt, ist jedem Assoziativpseicher CAM1 bis CAMn ein Schreib-Lese-Speicher RAM1 bis RAMn zugeordnet. Jeweils ein Schreib-Lese-Speicher RAM und ein Assoziativspeicher CAM ergeben zusammen einen Rahmenzuordnungsspeicher FAM (FAM1 bis FAMn). Jeweils ein Rahmenzuordnungsspeicher FAM1 bis FAMn ist einem Kanal zugeordnet. Es können bis zu 30 Rahmenzuordnungsspeicher parallel geschaltet werden. Die in Figur 4 skizzierte Schaltung arbeitet wie folgt:

Jeweils wenn eines von n zusammengehörigen Datenwörtern von der Zugangseinheit TERI empfangen wird, wird es in einen der n Rahmenzuordnungsspeicher FAM1 bis FAMn eingeschrieben. Jeder Rahmenzuordnungsspeicher ist 8 Worte tief und 12 Bit breit, wobei von den 12 Bits 8 dem jeweiligen Schreib-Lese-Speicher RAM1 bis RAMn und 4 dem jeweiligen Assoziativspeicher CAM1 bis CAMn angehören. Assoziativspeicher und Schreib-Lese-Speicher werden mit einer gemeinsamen Schreibadresse adressiert, die durch den Eingangsrahmenzähler 33 mit 3 Bit adressiert wird. Der Assoziativspeicher besitzt einen separaten Assoziativadresseingang AA, der vom Ausgangsrahmenzähler 34 adressiert wird, welcher ein 4-Bit-Zähler ist. Der Ausgang des Assoziativspeichers CAM aktiviert während des Assoziativmodus eine Wortauswahlleitung des Zugehörigen Schreib-Lese-Speichers RAM. Die Einschreibadresse der Rahmenzuordnungsspeicher FAM, die für alle n während einer Rahmendauer empfangenen Daten gilt (wobei jedoch unterschiedliche Rahmennummern auftreten) wird durch den Modulo-8-Zähler geliefert, der zu Beginn eines jeden Rahmens weitergezählt wird. Um die n Daten auszulesen, die dem ursprünglichen Rahmen q angehören, werden alle n Assoziativspeicher CAM1 bis CAMn in den Assoziativmodus gebracht und die Assoziativadresse q angelegt.

Es werden jeweils diejenigen Ausgangsleitungen der Assoziativspeicher CAM1 bis CAMn in jedem Rahmenzuordnungsspeicher FAM1 bis FAMn aktiviert, bei denen die Information für den Rahmen q gespeichert ist. Damit werden diejenigen Adressen der Schreib-Lese-Speicher aktiviert, die den Inhalt des Rahmens q enthalten. Auf diese Weise wird wieder ein korrekter Datenausgang mit n x 64 kBit/s erreicht. Die Datenausgänge der Schreib-Lese-Speicher RAM1 bis RAMn sind in Figur 4 mit "AD" bezeichnet. Weiter ist eine Steuereinheit 43 gezeigt, die die Arbeit der Rahmenzuordnungsspeicher FAM1 bis FAMn steuert und hierzu verschiedene Befehle an die Schaltung abgibt.

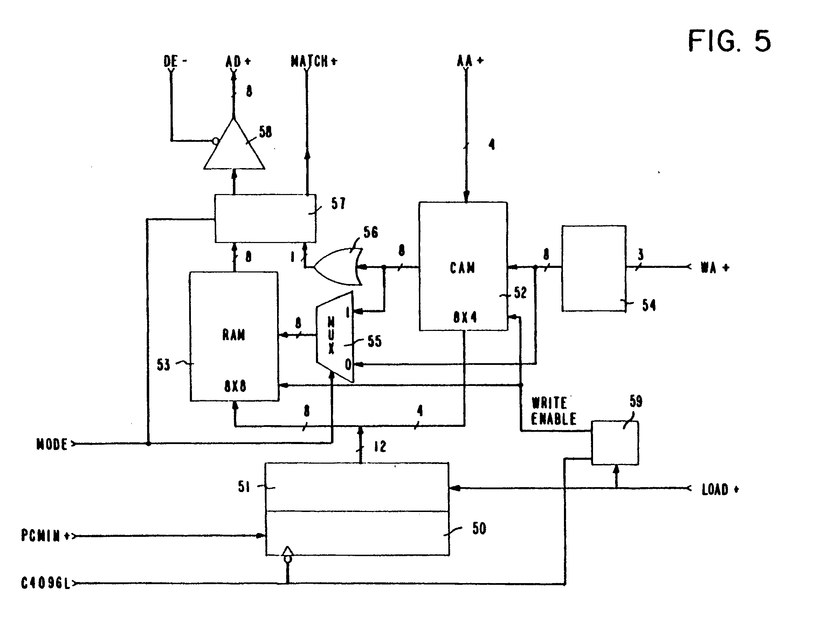

In Figur 5 ist ein detailliertes Blockdiagramm eines einzelnen Rahmenzuordnungsspeichers gezeigt. Einem Rahmenzuordnungsspeicher FAM werden von außen die folgenden Signale zugeführt: Das mit PCMIN+ bezeichnete Signal ist ein PCM Eingangssignal mit 16 Bit, das von einer an die Zugangseinheit TERI kommenden Anpaßschaltung kommt. Der mit "C4096L" bezeichnete Eingang ist ein Takteingang mit 4096 kBit/s. Der LOAD-Eingang ist eine 1-Bit-Leitung, auf der von der Anpaßschaltung ein Übernahmesignal (Strobe) kommt, durch das die Übernahme der vom Signal PCMIN+ kommenden Daten und deren Einschreiben in den Rahmenzuordnungsspeicher veranlaßt wird.

Der MODE-Eingang ist einpolig. Bei einem High-Signal kann eingeschrieben, bei einem Low-Signal assoziiert ausgelesen werden. Der WA-Eingang gibt in positiver Logik die dreistellige Einschreibadresse an. Der mit AA bezeichnete Eingang ist der Eingang für die assoziative Adresse. Auch hier gilt die positive Logik. Dort, wo positive Logik gilt, ist in Figur 5 ein Pluszeichen eingetragen. Der mit MATCH bezeichnete Übergabepunkt ist ein einstelliger Ausgang, der anzeigt, wenn im Assoziativspeicher ein gesuchtes Wort gefunden wird. Der Ausgang AD ist ein achtstelliger Ausgang für die wiedergewonnenen Ausgangsdaten. Den Ausgängen AD sind Tri-State-Buffer 58 zugeordnet, die über einen gemeinsamen Eingang DE aktiviert werden, wenn das Signal an diesem Eingang low ist. Dies wird auch durch das Minuszeichen am Eingang DE angedeutet.

Die am Eingang PCMIN+ ankommenden Daten werden in ein Schiebergeister 50 eingeschrieben, welches jeweils 12 Bit eines 16-Bit-Worts aufnimmt. Durch das Signal am LOAD-Eingang werden diese 12 Bit in einen Zwischenspeicher 51 übernommen und in die Speicherzellen 52 und 53 des Assoziativspeichers CAM bzw. des Schreib-Lese-Speichers RAM eingeschrieben. Beispielsweise werden die Bits C, B, A, 9, 8, 7, 6, und 5 in die durch die Adresse WA ausgewählte Speicherzelle des Schreib-Lese-Speichers 53 und die Bits 4, 3, 2, und 1 in die entsprechende Speicherzelle 52 des Assoziativspeichers eingeschrieben. Sowohl die Adresse für den Assoziativspeicher CAM, wie auch die Adresse für den Schreib-Lese-Speicher RAM werden durch einen Adressdecoder 54 geliefert. Die von Eingang WA kommende und im Adressdecoder 54 decodierte Schreibadresse wird direkt auf die Auswahleingänge des Assoziativspeichers CAM und über einen Multiplexer 55 auf die entsprechenden Eingänge des Schreib-Lese-Speichers RAM gegeben. Jeder Assoziativspeicher CAM enthält 8 statische Speicherzellen 52 mit je 4 Bit. Zum Einschreiben wird die Schreibadresse WA und zum Auslesen die Assoziativadresse AA verwendet. Die assoziativen Ausgänge der Assoziativspeicher CAM werden ebenfalls über den Multiplexer 55 an die Auswahleingänge des Schreib-Lese-Speichers RAM angeschlossen. Wenn der Mode-Eingang auf high ist, dann wird der Schreib-Lese-Speicher RAM von den Assoziativausgängen des Assoziativspeichers CAM aus angesteuert, wenn der Mode-Eigang auf Null liegt, erfolgt diese Ansteuerung vom Adressdecoder 54 aus. Die Umschaltung erfolgt im Multiplexer 55. Der Schreib-Lese-Speicher RAM enthält 8 statische Speicherzellen 53 mit je 8 Bit. Weiter ist ein ODER-Gatter 56 an die Assoziativausgänge des Assoziativspeichers CAM angeschlossen. Hier wird das am MATCH-Ausgang abgegebene Signal erzeugt. Es ist aktiv, wenn irgendein Ausgang des Assoziativspeichers CAM aktiv ist.

Der Ausgang des ODER-Gatters 56 und die Datenausgänge des Schreib-Lese-Speichers RAM sind an die Eingänge eines Ausgangszwischenspeichers 57 geführt. Der Ausgangszwischenspeicher 57 übernimmt die Daten an seinen Eingängen bei der inaktiven Flanke des vom Mode-Eingang kommenden Signals. Die den 8 Ausgängen des Schreib-Lese-Speichers RAM zugeordneten Ausgänge des Ausgangszwischenspeichers 57 sind auf Eingänge des bereits erwähnten Tri-State-Buffers 58 geführt.

Ein Logikmodul 59 erzeugt das Einschreibsignal sowohl für den Assoziativspeicher CAM wie auch für den Schreib-Lese-Speicher RAM. Mit diesem Signal werden die im Zwischenspeicher 51 enthaltenen Daten in die durch den Adressdecoder 54 ausgewählten Speicherzellen des Assoziativspeichers und des Schreib-Lese-Speichers eingeschrieben.

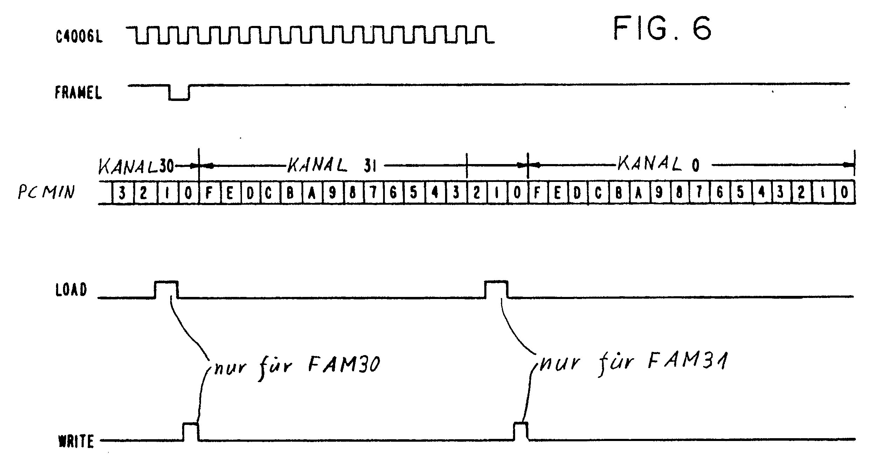

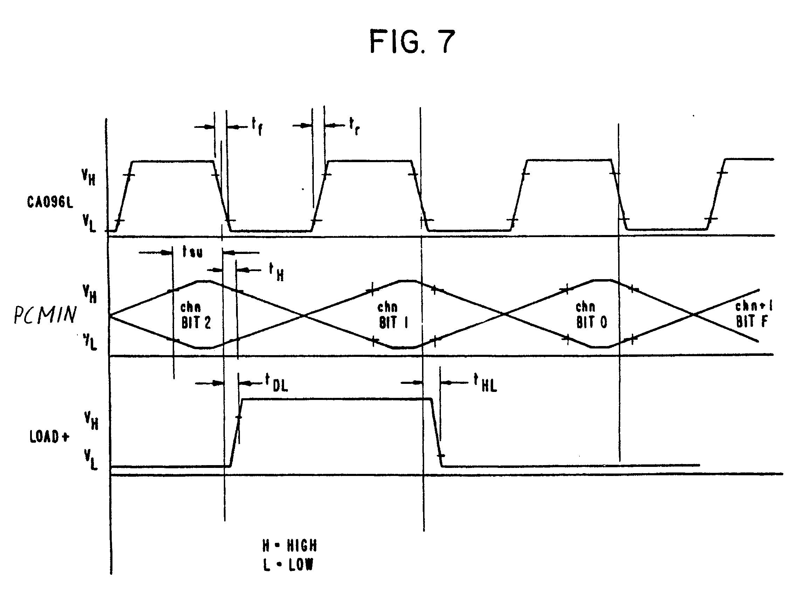

Anhand der Figur 6 wird der Einschreibvorgang in die Rahmenzuordnungsspeicher FAM1 bis FAMn beschrieben. Der zeitliche Ablauf des Einschreibvorgangs muß auf den zeitlichen Ablauf im Koppelwerk abgestimmt sein. Dies ist in Figur 6 und - weiter detailliert - in Figur 7 dargestellt. Während der in Figur 6 gezeigten Einschreibzeit ändert sich die Wortadresse WA nicht und Mode ist inaktiv (low). Durch das LOAD-Signal wird das aktuelle PCM-Wort in die durch die Wortadresse WA be-stimmten Speicherzellen desjenigen Rahmenzuord-nungsspeichers FAM1 bis FAMn eingeschrieben, der vom LOAD-Signal aktiviert wird. Gezeigt ist das LOAD-Signal für den Rahmenzuordnungsspeicher 30 und den Rahmenzuordnungsspeicher 31. Außer-dem ist ein Rahmensynchronisationssignal FRA-MEL und das Taktsignal C4096L eingezeichnet.

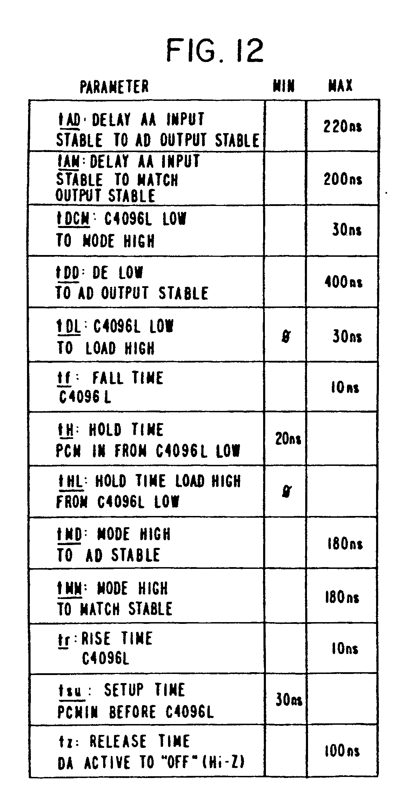

In Figur 7 sind weitere Einzelheiten des Einschreibvorgangs dargestellt. Sie zeigen die unterschiedlichen Verzögerungen, die erforderlich sind, damit für jedes Bit eines jeden Kanals der Einschreibvorgang ordnungsgemäß abläuft. Hier sind auch weitere Angaben über das zeitliche Verhalten eingetragen, die in Figur 12 noch weiter spezifiziert werden.

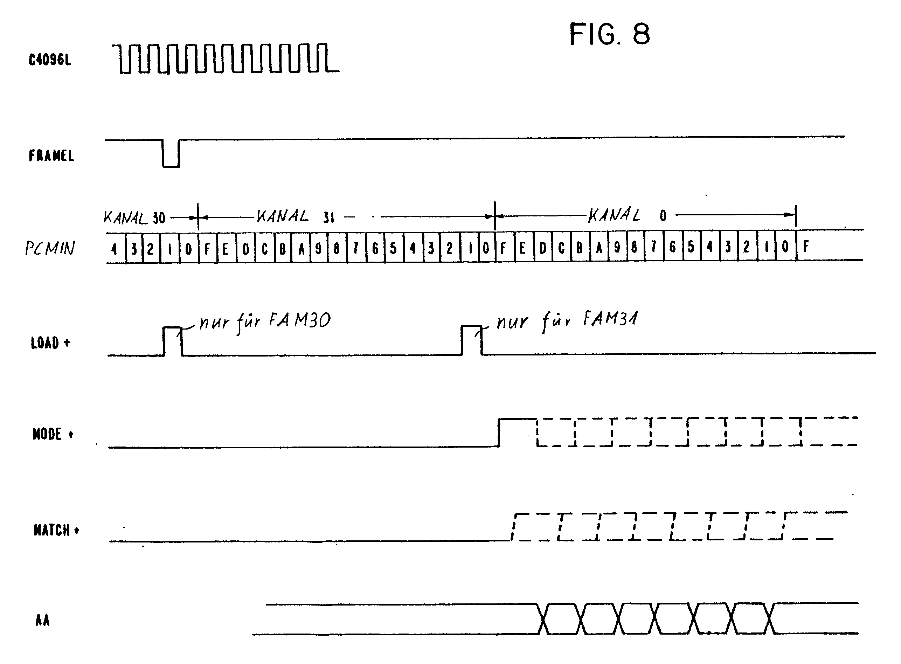

In Figur 8 ist der zeitliche Ablauf des Suchmodus dargestellt.

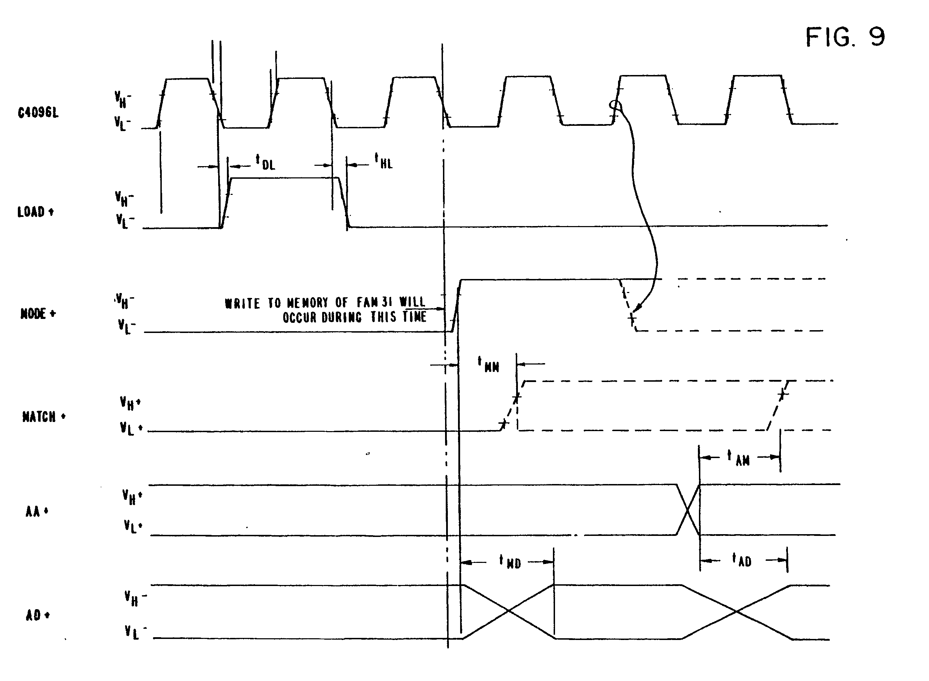

Der Suchmodus wird beim Aufbau einer Mehrkanalverbindung benötigt. Mit ihm wird eine Nummer p gesucht, die in allen n Assoziativspeichern erscheint und damit erkennen läßt, daß das komplette, ursprünglich im Rahmen mit der Nummer p enthaltene n x 8-Bit-Datenwort in die Rahmenzuordnungsspeicher übertragen ist. Da der Kanal Null nie benützt wird, wird während dieser Zeit auch nicht in den Rahmenzuordnungsspeicher eingeschrieben. Die Zeit der Übertragung des Kanals Null wird deshalb als Suchzeit verwendet Figur 8 zeigt die gesamte Suchoperation, während Figur 9 detaillierte Ausschnitte daraus wiedergibt. Die Wirkungsweise der Schaltung in Figur 5 während der Suchzeit erfolgt im wesentlichen so, daß über die Assoziativadresseingänge AA aller n Rahmenzuord-nungsspeicher FAM eine bestimmte Rahmenadres-se p angelegt wird, daß der MODE-Eingang aktiv gemacht wird und daß der MATCH-Ausgang beobachtet wird. Der MATCH-Ausgang wird aktiv , wenn in irgendeiner Speicherzelle 52 des Assoziativspeichers der Wert p auftritt. Wenn alle n MATCH-Ausgänge aller n Rahmenzuordnungsspeicher FAM für einen bestimmten Wert p aktiv sind, so ist dieser Wert p eine gültige Rahmennummer. Ist dies nicht der Fall, so wird p weitergezählt und der Vorgang wiederholt. Bei derjenigen assoziativen Adresse p, bei der alle n MATCH-Ausgänge gleichzeitig aktiv werden, wird der MODE-Eingang wieder inaktiv und im Ausgangszwischenspeicher 57 werden die zu diesem Zeitpunkt anliegenden Daten festgehalten. Der Ausgangszwischenspeicher 57 wirkt insoweit ähnlich wie eine Sample-and-Hold-Schaltung, bei der im einen Betriebszustand die Ausgangswerte ständig gleich den Eingangswerten sind und im anderen Betriebszustand die Ausgangswerte festgehalten werden.

Wie in Figur 8 zu sehen ist, gibt es bis zu 8 assoziative Zugriffe zu den Assoziativspeichern und 7 Erhöhungen der Adresse während eines Kanals Null. Dem letzten assoziativen Abfragen folgt keine Adresserhöhung; die letzte Adresse wird als Startadresse beim nächsten Kanal Null verwendet.

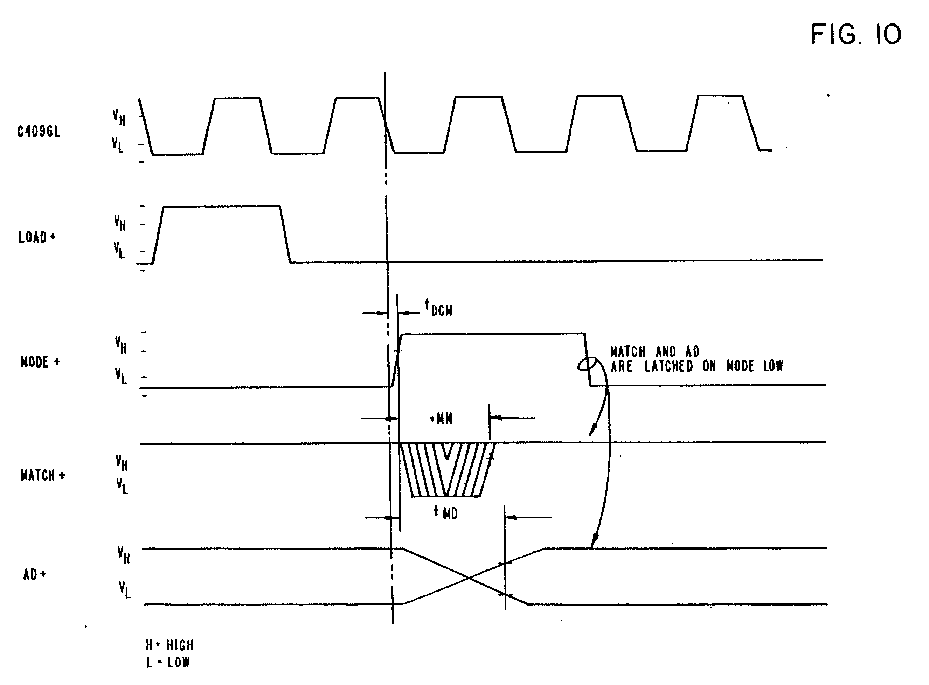

In Figur 10 wird nun eine normale mehrkanalige Leseoperation und der Zeitablauf hierfür gezeigt. Auf die Suche folgend wird nun pro Rahmen während des Kanals Null ein Auslesevorgang für alle Kanäle durchgeführt. Während dieses Vorgangs wird, wie in Figur 10 gezeigt, an alle n assoziativen Adresseingänge AA eine Assoziativadresse p angelegt und der MODE-Eingang wird eine Taktperiode, nachdem der LOAD-Eingang low ist aktiviert. Die ausgegebenen Daten und der Zustand des MATCH-Signals werden im Ausgangszwischenspeicher 57 festgehalten, wenn MODE auf Low geht, vgl. Figur 10.

Bei korrekter Betriebsweise sind alle n MATCH-Ausgänge aktiv und die n wiedergewonnenen Informationsbytes, aus denen das empfangene Wort zusammengesetzt wird, sind in den Rahmen-zuordnungsspeichern enthalten. Sie werden an-schließend ausgelesen, indem die Tri-State-Buffer 58 der einzelnen Rahmenzuordnungsspeicher der Reihe nach aktiviert werden.

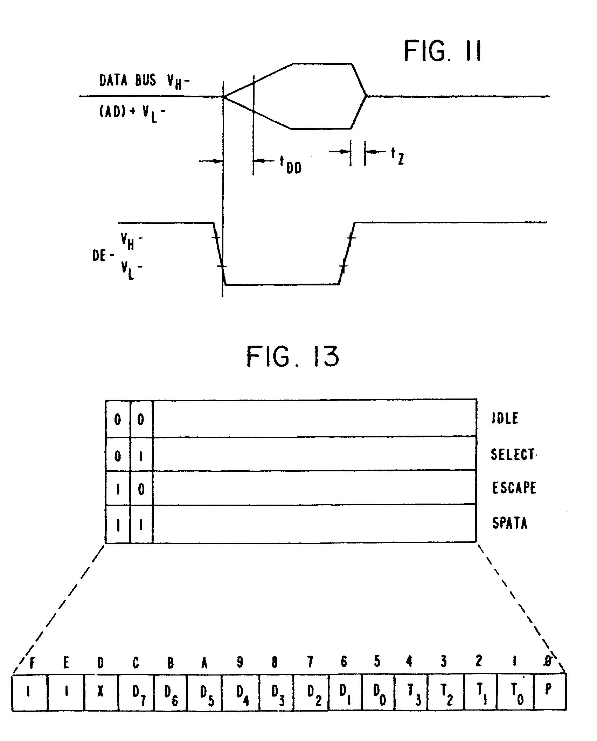

In Figur 11 wird nun der Zeitablauf gezeigt, der sich beim Auslesen der n Bytes von den n Rahmenzuordnungsspeichern FAM1 bis FAMn über die Datenausgänge AD ergibt (vgl. Figur 4).

Figur 12 zeigt eine Tabelle mit zeitlichen Parametern, die in den Figuren 7, 9, 10 und 11 vorkommen. Diese zeitlichen Parameter sind mit dem Takt von 4096 kBit/s, der ebenfalls in all diesen Figuren eingezeichnet ist, vereinbar.

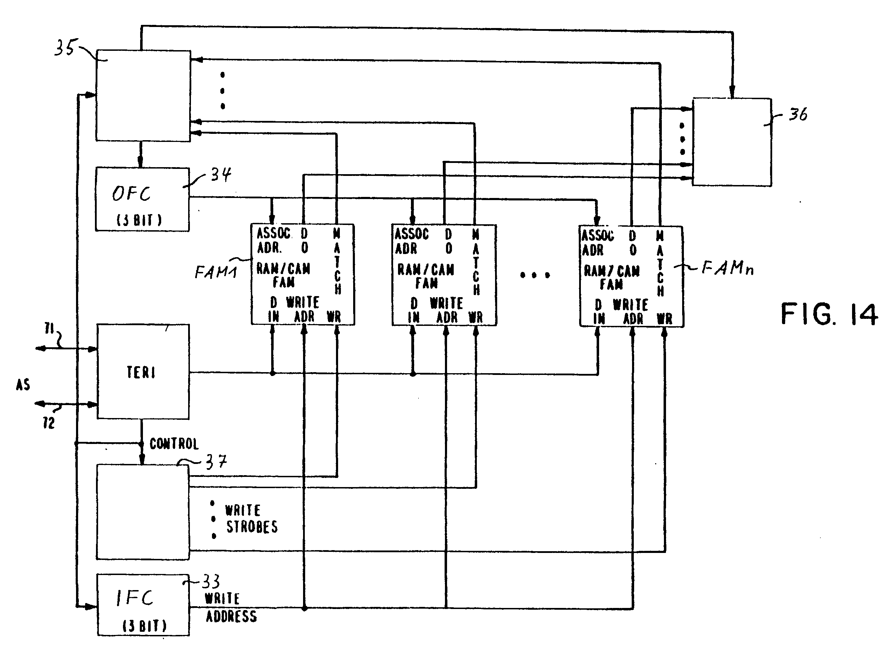

In Figur 13 wird das Datenformat gezeigt, mit dem bei Breitbandverbindungen die einzelnen 8 Bit-Worte in verschiedenen Kanälen übertragen werden. Die Bedeutung der hier gezeigten Datenwörter "Idle", "Select", "Escape" und "Spata" wird im US-Patent 4,201,890 anhand der Figuren 10 und 11 beschrieben. Darunter ist die Aufteilung eines Datenworts "Spata" für den Fall einer Breitbandverbindung näher erklärt.

Die Bits F, E und D werden für die Auswahl des jeweiligen Formatprotokolls verwendet. Dies gilt auch bei Breitbandverbindungen. Die Bits C, B, A, 9, 8, 7, 6 und 5 sind der Datenteil eines Breitbandwortformats. Die Bits 4, 3, 2 und 1 enthalten die Rahmennummer die wie oben beschrieben, in den Assoziativspeichern verwendet wird. Das mit Ø gekennzeichnete Bit ist das Paritätsbit. Ein solches Wortformat paßt also völlig mit dem üblicherweise in einer Vermittlungsstelle der genannten Art verwendeten Datenwort zusammen. Es ist bekannt, wie ein solches Datenwort auf der Sendeseite der Vermittlungseinheit gebildet werden muß. Ein von einem Endgerät oder einer anderen Vermittlung kommendes Signal wird in Blöcke und dann in Bytes zu je 8 Bits aufgeteilt. Dies erfolgt in bekannten Schaltungen, wobei dann jedes Byte mit der vierstelligen Nummer gekennzeichnet wird, die die Rahmennummer darsfellt. Wie schon erwähnt sind Techniken hierfür bekannt und Beispiele sind in den oben genannten Patenten angegeben.

Die anhand der Figuren 3 und 4 skizzierte Schaltungsanordnung wird anhand der Figur 14 noch weiter verdeutlicht. Die Zugangseinheit TERI bedient im wesentlichen zwei bidirektionale Übertragungswege 71 und 72, die mit den Zugangskoppelfeldern AS verbunden sind. Die Zugangseinheit TERI steuert die zeitliche Abstimmung zwischen dem Koppelnetzwerk und dem Register 37, das für die richtige Zuordnung der einzelnen Kanäle erforderlich ist. Das Register 37 erzeugt die Schreibbefehle (write strobes) für die Rahmenzuordnungsspeicher FAM1 bis FAMn. Diese wiederum bestehen aus Assoziativspeichern CAM1 bis CAMn und Schreib-Lese-Speichern RAM1 bis RAMn. Die Daten gelangen über die Zugangseinheit TERI an die Dateneingänge der Rahmenzuordnungsspeicher FAM1 bis FAMn. Die Schreibadressen für die Rahmenzuordnungsspeicher FAM1 bis FAMn werden im Eingangsrahmenzähler 33 gebildet. Der Ausgangsrahmenzähler 34, der von der Synchronisationssteuereinheit 35 weitergezählt wird, ist ein 3-Bit-Zähler, der die assoziativen Adressen der Rahmenzuordnungsspeicher FAM1 bis FAMn bildet. Die MATCH-Ausgänge der Rahmenzuordnungspeicher werden in der Synchronisationssteuereinheit 35 ausgewertet, um den Ausgangsrahmenzähler 34 weiterzuzählen.

Die Ausgangsdaten der Rahmenzuordnungsspeicher werden an das Ausgangsregister 36 abgegeben. Das Ausgangsregister 36 kann vom Typ last-in-first-out sein. Damit wird erreicht, daß die Daten wieder in der ursprünglichen Reihenfolge ausgegeben werden.

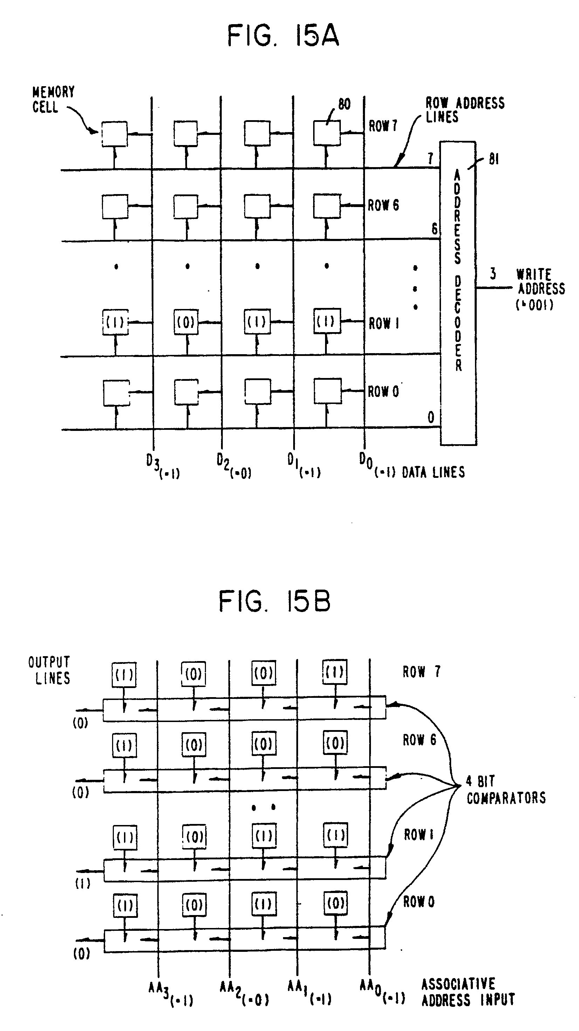

In Figur 15a ist ein typisches Blockschaltbild eines Assoziativspeichers während des Einschreibvorgangs gezeigt. Der Assoziativspeicher enthält im wesentlichen 8 Zeilen und 4 Spalten, wobei jedem Schnittpunkt einer Zeile und einer Spalte eine Speicherzelle 80 zugeordnet ist. Ein Adressdecoder 81 empfängt die Schreibadresse und aktiviert die dieser Adresse zugeordnete Zeile. Während des Einschreibvorgangs werden die an den Dateneingängen D0 bis D3 anliegenden Daten in die Speicherzellen der aktivierten Zeile eingeschrieben.

In Figur 15b wird das assoziative Auslesen aus einem Assoziativspeicher gezeigt. Jeder Assoziativspeicher enthält in jeder Zeile einen 4-Bit-Komparator. Während des assoziativen Auslesens wird der Inhalt jeder Zeile mit der an den Assoziativadresseingängen AA0 bis AA3 angelegten assoziativen Adresse verglichen. Ein Ausgang wird dann aktiv, wenn der Inhalt einer Zeile mit der assoziativen Adresse übereinstimmt. Derartige Speichertypen sind, wie schon erwähnt, weit verbreitet und werden auch von vielen Herstellern geliefert.

Insgesamt wurde hier eine Lösung beschrieben, die es erlaubt, die Bandbreite eines Vermittlungssystems mit verteilter Steuerung durch Verwendung eines mehrkanaligen Vermittlungswegs auf n x 64 kBit/s zu erhöhen. Hierzu werden n Verbindungen gleichzeitig aufgebaut, wobei n eine ganze Zahl zwischen 2 und 30 ist. Um die Rahmenintegrität herzustellen und zu erhalten, wird jedem der n Bestandteile eine Rahmennummer zugefügt. Jedes der n Bestandteile besteht aus 8 Datenbits. Die Rahmennummer wird (modulo 16) bei jedem Rahmen erhöht und in dem übertragenen 16-Bit-Wort in die Positionen 4 bis 1 eingefügt. Auf diese Weise werden für die n Bestandteile n unabhängige Verbindungen aufgebaut. Am empfangsseitigen Ende werden die Daten mit derselben Rahmennummer herausgesucht und daraus das jeweilige Datenwort rekonstruiert.

Die anhand der Figur 3, 4 und 14 beschriebenen Schaltungen stellen die in der Figur 1 bereits vorgestellten Breitbandmodule WBM, beispielsweise die Breitbandmodule 20 und 21 dar. Die n1 Bytes des von der Quelle 1 kommenden Worts werden mit einer Rahmennummer gekennzeichnet. Im Koppelnetz werden n1 von einander unabhängige Verbindungswege aufgebaut, auf denen die n1 Bytes zwischen der sendeseitigen Modulsteuereinheit TCE (A) und der empfangsseitigen Modulsteuereinheit TCE (B) übertragen werden. Der Breitbandmodul 21 an der Empfangsseite verwendet die Rahmennummer um die von der Quelle kommende Rahmenzuordnung zu rekonstruieren. Jeder Breitbandmodul ist als VLSI-Schaltung ausgeführt. Sie ist programmierbar und kann 2 bis 30 Kanäle verarbeiten. Sie weist im wesentlichen den in Figur 5 gezeigten Aufbau auf.

**Patentansprüche**

1.  Verfahren zur Herstellung und zum Betreiben einer Zeitvielfach-Breitbandverbindung zwischen einem Eingangsmodul (20) und einem Ausgangsmodul (21) einer Zeitvielfach-Vermittlungsstelle, wobei für eine Breitbandverbindung jeweils n (Schmalband-) Kanäle innerhalb eines Zeitvielfach-Rahmens belegt werden, **dadurch gekennzeichnet,**

- daß allen n Bestandteilen eines Breitband-Datenworts in vorgegebenen Bitpositionen eine Rahmenkennzeichnungsnummer zugefügt wird,
- daß bei jedem Rahmen die Rahmenkennzeichnungsnummer weitergezählt wird,
- daß n voneinander unabhängige Verbindungen für die n Kanäle durch die Vermittlungsstelle aufgebaut werden und
- daß im Ausgangsmodul (21) immer diejenigen n Datenwörter zu einem Breitband-Datenwort zusammengefügt werden, die mit der gleichen Rahmenkennzeichnungsnummer versehen sind.

2. Verfahren nach Anspruch 1, dadurch gekennzeichnet, daß n eine ganze Zahl zwischen 2 und 30 ist.

3. Verfahren nach Anspruch 1 oder 2, dadurch gekennzeichnet, daß ein Zeitvielfach-Rahmen 32 Wörter mit je 16 Bit enthält und daß jedes Wort das Format F, E, D, C, B, A, 9, 8, 7, 6, 5, 4, 3, 2, 1, Ø aufweist.

4. Verfahren nach Anspruch 3, dadurch gekennzeichnet, daß die Rahmenkennzeichnungsnummer in einem Modulo-16-Zähler erzeugt wird.

5. Verfahren nach Anspruch 3 oder 4, dadurch gekennzeichnet, daß die Rahmenkennzeichnungsnummer in die Bitpositionen 4 bis 1 eines jeden Wortes eingefügt wird.

6. Verfahren nach Anspruch 5, dadurch gekennzeichnet, daß die Dateninformation in den Bitpositionen C, B, A, 9, 8, 7, 6 und 5 enthalten ist.

7. Verfahren nach einem der Ansprüche 1 bis 6, dadurch gekennzeichnet, daß im Ausgangsmodul (21) zum Auffinden von Datenwörtern mit gleicher Rahmenkennzeichnungsnummer Assoziativspeicher (CAM) verwendet werden.

8. Verfahren nach Anspruch 7, dadurch gekennzeichnet, daß für jeden der an der Breitbandverbindung beteiligten n Kanäle ein Assoziativspeicher (CAM1 bis CAMn) verwendet wird.

9. Vermittlungsstelle mit Breitbandmodulen (20, 21), die den Aufbau n-kanaliger Verbindungen durch das Koppelnetzwerk (10) der Vermittlungsstelle erlauben, zur Durchführung eines Verfahrens nach einem der Ansprüche 1 bis 8, **dadurch gekennzeichnet,**

- daß ein Breitbandsendemodul oder der Sendeteil eines Breitbandmoduls (20) so ausgebildet ist, daß ein Breitband-Wortformat zur Sendung durch das Koppelnetzwerk (10) gebildet wird, das eine erste Anzahl von Bits enthält, in denen die zu übertragenden Daten enthalten sind und das eine zweite Anzahl von Bits enthält, in denen für jedes Breitbandwort eine Rahmenkennzeichnungsnummer enthalten ist,
- daß ein Zähler vorhanden ist, in dem bei jedem Rahmen die Rahmenkennzeichnungsnummer erhöht wird,
- daß ein Breitbandempfangsmodul oder der Empfangsteil eines Breitbandmoduls (21) so ausgebildet ist, daß die Rahmenkennzeichnungsnummer zum richtigen Zusammenfügen der Breitband-Datenworte verwendet wird,
- daß im Breitbandempfangsmodul bzw. Empfangsteil des Breitbandmoduls (21) Rahmenzuordnungsspeicher (FAM1 bis FAMn) vorhanden sind, in denen das Breitband-Datenwort zusammen mit den Rahmenzuordnungsnummern gespeichert wird und daß ein Ausgangsregister (36) vorhanden ist, in dem das Breitband-Datenwort aus den n einzelnen Datenworten mit derselben Rahmenzuordnungsnummer zusammengefaßt wird.

10. Vermittlungsstelle nach Anspruch 9, dadurch gekennzeichnet, daß die Rahmenzuordnungsspeicher (FAM1 ... FAMn) einen Datenspeicherteil (RAM1 ... RAMn) und einen Assoziativspeicherteil (CAM1 ... CAMn) aufweisen, daß ein Ausgangsrahmenzähler (34) mit den Assoziativspeichern (CAM1 ... CAMn) verbunden ist und für die Assoziativspeicher (CAM1 ... CAMn) eine assoziative Adresse bildet, die der Rahmenkennzeichnungsnummer entspricht, daß eine Steuereinheit (35) an die Assoziativspeicher(CAM1 ... CAMn)-angeschlossen ist, in der festgestellt wird, ob die Rahmenzuordnungsspeicher (FAM1 ... FAMn) Daten enthalten, die der angelegten assoziativen Adresse und damit der zugehörigen Rahmenzu kennzeichnungsnummer zugehören und daß allen Rahmenzuordnungsspeichern (FAM1 ... FAMn) ein Ausgangsregister (36) zugeordnet ist, in dem die n zusammengehörigen, in den Rahmenzuordnungsspeichern (FAM1 ... FAMn)enthaltenen Datenwörter zusammengefaßt werden.

**11.** Vermittlungsstelle nach Anspruch 9 oder 10, dadurch gekennzeichnet, daß n eine ganze Zahl zwischen 2 und 30 ist.

**12.** Vermittlungsstelle nach Anspruch 10 oder 11, dadurch gekennzeichnet, daß der Datenspeicherteil (RAM1 ... RAMn) Daten vom Koppelnetzwerk (10) erhält und Einrichtungen (50, 51) vorhanden sind, mittels derer die Daten in die Rahmenzuordnungsspeicher (FAM1 ... FAMn) eingeschrieben werden.

**13.** Vermittlungsstelle nach einem der Ansprüche 10 bis 12, dadurch gekennzeichnet, daß logische Einheiten (56) den Rahmenzuordnungsspeichern (FAM1 ... FAMn) zugeordnet sind, die angeben, wenn irgendeiner der Rahmenzuordnungsspeicher (FAM1 ... FAMn) keine der jeweiligen Rahmenkennzeichnungsnummer zugeordneten Daten enthält und daß die Steuereinheit (35) den Ausgangsrahmenzähler (34) für eine Neusynchronisation zurücksetzt, wenn die logischen Einheiten (56) das Fehler eines gültigen Dateninhalts anzeigen.

**14.** Vermittlungsstelle nach einem der Ansprüche 9 bis 13, dadurch gekennzeichnet, daß die Wortlänge 16 Bit beträgt, daß auch ein Breitbandwort aus 16 Bit besteht, wobei die erste Anzahl von Bits 8 beträgt und die zweite Anzahl von Bits, die die Rahmenzuordnungsnummer enthält, gleich 4 ist.

**15.** Vermittlungsstelle nach einem der Ansprüch 10 bis 14, dadurch gekennzeichnet, daß der Datenspeicherteil (RAM1 ... RAMn) der Rahmenzuordnungsspeicher (FAM1 ... FAMn) pro Adresse 8 Bit speichern kann und daß der Assoziativspeicher (CAM1 ... CAMn) pro Adresse 4 Bit speichern kann.

**16.** Vermittlungsstelle nach einem der Ansprüche 10 bis 15, dadurch gekennzeichnet, daß der Datenspeicherteil (RAM1 ... RAMn) eines jeden Rahmenzuordnungsspeichers (FAM1 ... FAMn) einen Schreib-Lese-Speicher mit wahlfreiem Zugriff enthält, der an die Assoziativspeicher (CAM1 ... CAMn) angegliedert ist und daß die Schreib-Lese-Speicher (RAM1 ... RAMn) ihren Dateninhalt abgeben, wenn alle Assoziativspeicher (CAM1 ... CAMn) anzeigen, daß für die angelegte assoziative Adresse gültige Daten vorhanden sind.

**17.** Vermittlungsstelle nach Anspruch 16, dadurch gekennzeichnet, daß die Schreib-Lese-Speicher (RAM1 ... RAMn) und die Assoziativspeicher (CAM1 ... CAMn) dieselbe Schreibadresse aufweisen und daß dabei der Schreib-Lese-Speicher (RAM1 ... RAMn) den Datenteil und der Assoziativspeicher (CAM1 ... CAMn) die Rahmenkennzeichnungsnummer speichert.

**18.** Vermittlungsstelle nach Anspruch 17, dadurch gekennzeichnet, daß das Ausgangsregister (36) einen Ausgangszwischenspeicher (58) aufweist, der an die Schreib-Lese-Speicher (RAM1 ... RAMn) angeschlossen ist und die Datenbits zwischenspeichert, wenn alle Assoziativspeicher (CAM1 ... CAMn) gültige Daten anzeigen.

**19.** Vermittlungsstelle nach einem der Ansprüche 9 bis 18, dadurch gekennzeichnet, daß das Empfangsteil des Breitbandmoduls (21) ein Register (37) enthält, das einen Steuereingang aufweist, das den Systemtakt der Vermittlungsstelle erhält, um Daten in die Rahmenzuordnungsspeicher (FAM1 ... FAMn) einzuspeichern und einen Eingangsrahmenzähler (33), der den Rahmenzuordnungsspeichern (FAM1 ... FAMn) zugeordnet ist und deren Einschreibadressen bildet.

**20.** Vermittlungsstelle nach einem der Ansprüche 9 bis 19, dadurch gekennzeichnet, daß sie eine verteilte Steuerung aufweist, daß sie ein Hauptkoppelfeld aufweist, daß sie eine Anschlußeinheit zwischen den angeschlossenen Anschlußteilen und dem Hauptkoppelfeld aufweist, und daß die Anschlußeinheit ein Zugangskoppelfeld aufweist.

**21.** Ausgangsmodul (21) für eine Vermittlungsstelle nach Anspruch 9 zur Durchführung von Verfahrensschritten des Verfahrens nach einem der Ansprüche 1 bis 8,
**dadurch gekennzeichnet,**
- daß eine Baugruppe (37) vorhanden ist, die aus den Zeitsignalen der Vermittlungsstelle die Zeitsignale zur Übernahme der Datenworte ableitet,
- daß für jeden der n an einer Breitbandverbindung beteiligten Kanäle ein Rahmenzuordnungsspeicher (FAM1 ... FAMn) vorhanden ist, der einen Datenspeicherteil (RAM1 ... RAMn) zur Aufnahme der Daten und einen Assoziativspeicherteil (CAM1 ... CAMn) zur Aufnahme der Rahmenkennzeichnungsnummer aufweist, wobei die Rahmenkennzeichnungsnummer eine assoziative Adresse zur Rahmenidentifizierung darstellt,
- daß ein Ausgangsrahmenzähler (34) vorhanden ist, der den Assoziativspeicherteil (CAM1 ... CAMn) adressiert, um an dessen Ausgang eine assoziative Adresse für den Datenspeicherteil (RAM1 ... RAMn) zu erhalten,

- daß eine Steuereinheit (35) den Rahmenzurodnungsspeichern (FAM1 ... FAMn) zugeordnet ist, mit der festgestellt wird, ob alle Rahmenzuordnungsspeicher (FAM1 ... FAMn) mit der jeweiligen Rahmenkennzeichnungsnummer versehene Daten aufweisen, und

- daß ein Ausgangsregister (36) vorhanden ist, das von der Steuereinheit (35) aus veranlaßt wird, das der jeweiligen Rahmenkennzeichnungsnummer zugeordnete Breitband-Datenwort aus den in den Datenspeicherteilen (RAM1 ... RAMn) enthaltenen Daten wieder zusammenzusetzen.

22. Ausgangsmodul nach Anspruch 21, dadurch gekennzeichnet, daß die Rahmenzuordnungsspeicher (FAM1 ... FAMn) zum Speichern der Daten Schreib-Lese-Speicher mit wahlfreiem Zugriff (RAM1 ... RAMn) und zum Speichern der Rahmenkennzeichnungsnummer Assoziativspeicher (CAM1 ... CAMn) enthalten.

23. Ausgangsmodul nach Anspruch 21 oder 22, dadurch gekennzeichnet, daß ein Eingangsrahmenzähler (33) vorhanden ist, der die Einschreibadressen für die Rahmenzuordnungsspeicher (FAM1 ... FAMn) liefert und daß eine Baugruppe (37) vorhanden ist, die an die Rahmenzuordnungsspeicher (FAM1 ... FAMn) Einschreibbefehle anlegt, um vom Koppelnetzwerk (10) kommende Daten in die Rahmenzuordnungsspeicher (FAM1 ... FAMn) einzuspeichern.

24. Ausgangsmodul nach einem der Ansprüche 21 bis 23, dadurch gekennzeichnet, daß eine logische Einheit (56) vorhanden ist, die mit dem Assoziativspeicherteil (CAM1 ... CAMn) verbunden ist und mit der festgestellt wird, ob alle Rahmenzuordnungsspeicher (FAM1 ... FAMn) gültige Daten enthalten und die daraufhin ein Steuersignal abgibt und daß die mit dem Ausgangsrahmenzähler (34) verbundene Steuereinheit (35) den Ausgangsrahmenzähler (34) weiterzählt, wenn nicht überall gültige Daten angezeigt werden und daß auf diese Weise der Ausgangsrahmenzähler (34) eine Anfangsadresse für die Rahmenzuordnungsspeicher (FAM1 .. FAMn) liefert um diese neu zu synchronisieren.

25. Ausgangsmodul nach einem der Ansprüche 21 bis 24, dadurch gekennzeichnet, daß ein Systemwort aus 16 Bit besteht und das Bitformat F, E, D, C, B, A, 9, 8, 7, 6, 5, 4, 3, 2, 1, Ø aufweist, daß die Daten in den Bits C, B, A, 9, 8, 7, 6 und 5 enthalten sind und daß die Rahmenkennzeichnungsnummer in den Bits 4, 3, 2 und 1 enthalten ist.

26. Ausgangsmodul nach Anspruch 25, dadurch gekennzeichnet, daß 32 solcher Worte (Systemworte) einen Rahmen bilden.

27. Ausgangsmodul nach einem der Ansprüche 21 bis 26, dadurch gekennzeichnet, daß n eine ganze Zahl zwischen 2 und 30 ist und daß die Gesamtbandbreite gleich n mal der Bandbreite eines Schmalbandkanals ist.

## Claims

1. Method of setting up and operating a time-division-multiplex wideband path between an input module (20) and an output module (21) of a time-division-multiplex exchange, with n (narrow-band) channels within a time-division-multiplex frame being occupied for setting up each wideband path, **characterized in**

- that a frame mark number is added to all n constituents of a wideband data word in predetermined bit positions,

- that the frame mark number is indexed every frame,

- that n independent paths for the n channels are set up through the exchange, and

- that in the output module (21), those n data words are assembled into a wideband data word which are tagged with the same frame mark number.

2. A method as claimed in claim 1, characterized in that n is an integer between 2 and 30.

3. A method as claimed in claim 1 or 2, characterized in that a time-division-multiplex frame contains 32 16-bit words, and that each word has the format F, E, D, C, B, A, 9, 8, 7, 6, 5, 4, 3, 2, 1, Ø.

4. A method as claimed in claim 3, characterized in that the frame mark number is generated in a modulo-16 counter.

5. A method as claimed in claim 3 or 4, characterized in that the frame mark number is inserted in bit positions 4 to 1 of each word.

6. A method as claimed in claim 5, characterized in that the data information is contained in bit positions C, B, A, 9, 8, 7, 6 and 5.

7. A method as claimed in any one of claims 1 to 6, characterized in that in the output module (21), content-addressable memories (CAM) are used for finding data words having the same frame mark number.

8. A method as claimed in claim 7, characterized in that for each of the n channels involved in the wideband connection, one content-addressable memory (CAM1 to CAMn) is used.

9. Exchange comprising wideband modules (20, 21) which permit n-channel paths to be set up through the switching network (10) of the exchange, for carrying out a method as claimed in any one of claims 1 to 8,
   **characterized in**
   - that a wideband transmit module or the transmit section of a wideband module (20) is adapted to form a wideband word format for transmission through the switching network (10) which contains a first number of bits containing the data to be transmitted, and which contains a second number of bits containing a frame mark number for each wideband word,
   - that a counter is provided in which the frame mark number is indexed during each frame,
   - that a wideband receive module or the receive section of a wideband module (21) is adapted to use the frame mark number for properly assembling the wideband data words,
   - that the wideband receive module or the receive section of the wideband module (21) includes frame association memories (FAM1 to FAMn) in which the wideband data word is stored together with the frame association numbers, and that an output register (36) is provided in which the wideband data word is assembled from the n individual data words having the same frame association number.

10. An exchange as claimed in claim 9, characterized in that the frame association memories (FAM1 ... FAMn) have a data memory section (RAM1 ... RAMn) and a content-addressable memory section (CAM1 ... CAMn), that an output frame counter (34) is coupled to the content-addressable memories (CAM1 ... CAMn) to provide an associative address for the content-addressable memories (CAM1 ...

CAMn) which corresponds to the frame mark number, that a control unit (35) is connected to the content-addressable memories (CAM1 ... CAMn) which determines if the frame association memories (FAM1 ... FAMn) contain data belonging to the applied associative address and, thus, to the associated frame mark number, and that all frame association memories (FAM1 ... FAMn) have an output register (36) associated therewith in which the n associated data words contained in the frame association memories (FAM1 ... FAMn) are assembled.

11. An exchange as claimed in claim 9 or 10, characterized in that n is an integer between 2 and 30.

12. An exchange as claimed in claim 10 or 11, characterized in that the data memory section (RAM1 ... RAMn) receives data from the switching network (10), and that devices (50, 51) are provided for writing the data into the frame association memories (FAM1 ... FAMn).

13. An exchange as claimed in any one of claims 10 to 12, characterized in that logic units (56) are associated with the frame association memories (FAM1 ... FAMn) which provide an output when any one of the frame association memories (FAM1 ... FAMn) does not contain data associated with the respective frame mark number, and that the control unit (35) resets the output frame counter (34) for resynchronization if the logic units (56) indicate the absence of a valid data content.

14. An exchange as claimed in any one of claims 9 to 13, characterized in that the word length is 16 bits, and that a wideband word also consists of 16 bits, with the first number of bits being 8 and with the second number of bits, which contains the frame association number, being 4.

15. An exchange as claimed in any one of claims 10 to 14, characterized in that the data memory section (RAM1 ... RAMn) of the frame association memories (FAM1 ... FAMn) is capable of storing 8 bits per address, and that the content-addressable memory (CAM1 ... CAMn) is capable of storing 4 bits per address.

16. An exchange as claimed in any one of claims 10 to 15, characterized in that the data memory section (RAM1 ... RAMn) of each frame association memory (FAM1 ... FAMn) includes a random-access read/write memory attached to the content-addressable memories (CAM1 ...

CAMn), and that the read/write memories (RAM1 ... RAMn) output their data contents if all content-addressable memories (CAM1 ... CAMn) indicate that valid data are present for the applied associative address.

17. An exchange as claimed in claim 16, characterized in that the read/write memories (RAM1 ... RAMn) and the content-addressable memories (CAM1 ... CAMn) have the same write address, and that the read/write memory (RAM1 ... RAMn) stores the data part, while the content addressable memory (CAM1 ... CAMn) stores the frame mark number.

18. An exchange as claimed in claim 17, characterized in that the output register (36) includes an output buffer (58) coupled to the read/write memories (RAM1 ... RAMn) and operative to latch the data bits when all content-addressable memories (CAM1 ... CAMn) indicate valid data.

19. An exchange as claimed in any one of claims 9 to 18, characterized in that the receive section of the wideband module (21) includes a register (37) having a control input adapted to receive the system clock of the exchange for writing data into the frame association memories (FAM1 ... FAMn), and an incoming frame counter (33) associated with the frame association memories (FAM1 ... FAMn) for forming the write addresses for said frame association memories.

20. An exchange as claimed in any one of claims 9 to 19, characterized in that it is a distributed control exchange, that it has a group switch, that it has a terminal unit between the connected terminals and the group switch, and that the terminal unit includes an access switch.

21. Output module (21) for an exchange as claimed in claim 9 for carrying out the steps of the method according to any one of claims 1 to 8,
    **characterized in**
    - that a unit (37) is provided which derives the timing signals for writing in the data words from the timing signals of the exchange,
    - that for each of the n channels involved in a wideband connection, a frame association memory (FAM1 ... FAMn) is provided. comprising a data memory section (RAM1 ... RAMn) for storing the data and a content-addressable memory section (CAM1 ... CAMn) for storing the frame mark number, the frame mark number representing an associative address for frame identification,
    - that an output frame counter (34) is provided which addresses the content-addressable memory section (CAM1 ... CAMn) to obtain at the output of the latter an associative address for the data memory section (RAM1 ... RAMn),
    - that a control unit (35) is associated with the frame association memories (FAM1 ... FAMn) which determines whether all frame association memories (FAM1 ... FAMn) contain data tagged with the respective frame mark number, and
    - that an output register (36) is provided which is caused by the control unit (37) to reassemble the wideband data word associated with the respective frame mark number from the data contained in the data memory sections (RAM1 ... RAMn).

22. An output module as claimed in claim 21, characterized in that the frame association memories (FAM1 ... FAMn) contain random-access read/write memories (RAM1 ... RAMn) for storing the data and content-addressable memories (CAM1 ... CAMn) for storing the frame mark number.

23. An output module as claimed in claim 21 or 22, characterized in that an incoming frame counter (33) is provided which delivers the write addresses for the frame association memories (FAM1 ... FAMn), and that a unit (37) is provided which applies write instructions to the frame association memories (FAM1 ... FAMn) to write data coming from the switching network (10) into the frame association memories (FAM1 ... FAMn).

24. An output module as claimed in any one of claims 21 to 23, characterized in that a logic unit (56) is provided which is connected to the content-addressable memory section (CAM1 ... CAMn) and determines whether all frame association memories (FAM1 ... FAMn) contain valid data, and which then provides a control signal, and that the control unit (35) connected to the output frame counter (34) advances the output frame counter (34) if valid data are not indicated everywhere, and that in this way the output frame counter (34) delivers a start address for the frame association memories (FAM1 ... FAMn) to resynchronize the latter.

25. An output module as claimed in any one of claims 21 to 24, characterized in that a system word consists of 16 bits and has the bit format F, E, D, C, B, A, 9, 8, 7, 6, 5, 4, 3, 2, 1, Ø, that the data is contained in bits C, B, A, 9, 8, 7, 6 and 5, and that the frame mark number is contained in bits 4, 3, 2 and 1.

26. An output module as claimed in claim 25, characterized in that 32 such words (system words) form a frame.

27. An output module as claimed in any one of claims 21 to 26, characterized in that n is an integer between 2 and 30, and that the total bandwidth is n times the bandwidth of a narrow-band channel.

**Revendications**

1. Procédé pour l'établissement et l'exploitation d'une liaison multiplex temporelle à large bande entre un module d'entrée (20) et un module de sortie (21) d'un autocommutateur à commutation temporelle, dans lequel pour une connexion à large bande, n voies (à bande étroite) sont occupées pendant une trame temporelle, caractérisé en ce que:
   - un numéro d'identification de trame est affecté à tous les n composants d'un mot de donnée à bande étroite à des positions de bit prédéterminées;
   - à chaque trame, le numéro d'identification de trame est incrémenté;
   - n liaisons indépendantes l'une de l'autre sont établies pour les n voies au moyen de l'autocommutateur; et
   - dans le module de sortie (21), sont toujours assemblés en un mot de donnée à large bande les n mots de données qui possèdent le même numéro d'identification de trame.

2. Procédé selon la revendication 1, caractérisé en ce que n est un entier compris entre 2 et 30.

3. Procédé selon la revendication 1 ou 2, caractérisé en ce qu'une trame temporelle est composée de 32 mots, chacun constitué de 16 bits, et en ce que chaque mot possède le format F, E, D, C, B, A, 9, 8, 7, 6, 5, 4, 3, 2, 1, 0.

4. Procédé selon la revendication 3, caractérisé en ce que le numéro d'identification de trame est généré dans un compteur Modulo 16.

5. Procédé selon la revendication 3 ou 4, caractérisé en ce que le numéro d'identification de trame est introduit dans chaque mot dans des positions de Dit 4 à 1.

6. Procédé selon la revendication 5, caractérisé en ce que les informations de données sont contenues dans les positions de bit C, B, A, 9, 8, 7, 6 et 5.

7. Procédé selon l'une des revendications 1 à 6, caractérisé en ce que le module de sortie (21) utilise des mémoires associatives (CAM) afin de trouver les mots de données ayant le même numéro d'identification de trame.

8. Procédé selon la revendication 7, caractérisé en ce qu'une mémoire associative (CAM1 à CAMn) est utilisée pour chacune des n voies participant à une liaison à large bande.

9. Autocommutateur pour la réalisation d'un procédé selon l'une des revendications 1 à 8, muni de modules à large bande (20, 21) permettant l'établissement de liaisons à n voies à travers le réseau de connexion (10) de l'autocommutateur, caractérisé en ce que:
   - un module à large bande d'émission ou la partie émission d'un module à large bande (20) est réalisé de telle manière que l'on constitue un format de mot à large bande à adresser à travers le réseau de connexion, ce format comprenant un premier nombre de bits contenant les données à transférer et un deuxième nombre de bits contenant, pour chaque mot à large bande, un numéro d'identification de trame;
   - il comporte un compteur dans lequel le numéro d'identification de trame est incrémenté à chaque trame;
   - un module à large bande de réception ou la partie réception d'un module à large bande (21) est réalisé de telle manière que le numéro d'identification de trame est utilisé pour assurer le bon assemblage des mots de données à large bande;
   - dans le module à large bande de réception ou respectivement la partie réception du module à large bande (21), des mémoires de coordination de trame (FAM1 à FAMn) sont prévues, dans lesquelles le mot de données à large bande ainsi que les numéros d'identification de trame sont stockés, et en ce qu'un registre de sortie (36) est prévu dans lequel le mot de données à large bande est assemblé à partir des n mots de données individuels ayant le même numéro d'identification de trame.

10. Autocommutateur selon la revendication 9, caractérisé en ce que les mémoires de coordination de trame (FAM1 ... FAMn) comportent une partie de mémoire de données (RAM1 ... RAMn) et une partie de mémoire associative (CAM1 ... CAMn), en ce qu'un compteur de trame de sortie (34) est associé aux mémoires associatives (CAM1 ... CAMn) et génère une adresse associative pour les mémoires associatives (CAM1 ... CAMn), cette adresse correspondant au numéro d'identification de trame, en ce qu'une unité de commande (35) est raccordée aux mémoires associatives (CAM1 ... CAMn) dans laquelle on détermine si les mémoires de coordination de trame (FAM1 ... FAMn) contiennent des données qui appartiennent à l'adresse associative appliquée et, par conséquent, au numéro d'identification de trame qui y est associé, et en ce qu'un registre de sortie (36) est associé à toutes les mémoires de coordination de trame (FAM1 ... FAMn), les n mots de données contenus dans les mémoires de coordination de trame (FAM1 ... FAMn) mises ensemble étant rassemblés dans ledit registre de sortie.

11. Autocommutateur selon la revendication 9 ou 10, caractérisé en ce que n est un entier compris entre 2 et 30.

12. Autocommutateur selon la revendication 10 ou 11, caractérisé en ce que la partie de mémoire de données (RAM1 ... RAMn) reçoit des données du réseau de connexion (10) et en ce qu'il comporte des dispositifs (50, 51) au moyen desquels des données sont écrites dans les mémoires de coordination de trame (FAM1 ... FAMn).

13. Autocommutateur selon l'une des revendications 10 à 12, caractérisé en ce que des unités logiques (56) sont associées aux mémoires de coordination de trame (FAM1 ... FAMn) qui indiquent si l'une quelconque des mémoires de coordination de trame (FAM1 ... FAMn) ne contient aucune donnée associée au numéro d'identification de trame concerné et en ce que les unités de commande (35) remettent les compteurs de trame de sortie (34) à zéro pour une nouvelle synchronisation quand les unités logiques (56) signalent l'erreur d'un contenu de données valable.

14. Autocommutateur selon l'une quelconque des revendications 9 à 13, caractérisé en ce que la longueur des mots est de 16 bits, en ce qu'un mot à large bande est également composé de 16 bits, ledit premier nombre de bits étant égal à 8 et le deuxième nombre de bits, qui contient le numéro d'identification de trame, étant égal à 4.

15. Autocommutateur selon l'une quelconque des revendications 10 à 14, caractérisé en ce que la partie de mémoire de donnée (RAM1 ... RAMn) de la mémoire de coordination de trame (FAM1 ... FAMn) est susceptible de stocker 8 bits par adresse et en ce que la mémoire associative (CAM1 ... CAMn) est susceptible de stocker 4 bits par adresse.

16. Autocommutateur selon l'une quelconque des revendications 10 à 15, caractérisé en ce que la partie de mémoire de données (RAM1 ... RAMn) de chaque mémoire de coordination de trame (FAM1 ... FAMn) contient une mémoire vive ou à accès aléatoire à l'écriture et à la lecture, qui est annexée à la mémoire associative (CAM1 ... CAMn), et en ce que la mémoire d'écriture et de lecture (RAM1 ... RAMn) fournit son contenu de données quand toutes les mémoires associatives (CAM1 ... CAMn) indiquent qu'il existe des données valables pour l'adresse associative appliquée.

17. Autocommutateur selon la revendication 16, caractérisé en ce que les mémoires à écriture et à lecture (RAM1 ... RAMn) et les mémoires associatives (CAM1 ... CAMn) ont les mêmes adresses d'écriture et en ce que, de cette manière, la mémoire à écriture et à lecture (RAM1 ... RAMn) mémorise la partie données et la mémoire associative (CAM1 ... CAMn) mémorise le numéro d'identification de trame.

18. Autocommutateur selon la revendication 17, caractérisé en ce que le registre de sortie (36) comporte une mémoire intermédiaire de sortie (58) qui est raccordée à la mémoire à écriture et à lecture (RAM1 ... RAMn) et réalise un stockage intermédiaire des bits de donnée quand toutes les mémoires associatives (CAM1 ... CAMn) affichent des données valables.

19. Autocommutateur selon l'une quelconque des revendications 9 à 18, caractérisé en ce que la partie réception des modules à large bande (21) comporte un registre (37) qui comporte une entrée de commande recevant le rythme système de l'autocommutateur afin de stocker des données dans la mémoire de coordination de trame (FAM1 ... FAMn), et également un compteur de trame d'entrée (33) qui est associé aux mémoires de coordination de trame (FAM1 ... FAMn) et qui génère les adresses d'écriture de cette dernière.

20. Autocommutateur selon l'une quelconque des revendications 9 à 19, caractérisé en ce qu'il comporte une commande distribuée, une matrice de commutation principale, et une unité de raccordement entre les parties de raccordement raccordées audit autocommutateur et ladite matrice de commutation principale, et en ce que l'unité de raccordement comporte une matrice de connexion d'accès.

21. Module de sortie (21) pour un autocommutateur selon la revendication 9, pour la mise en oeuvre des étapes du procédé selon l'une quelconque des revendications 1 à 8, caractérisé en ce que:
   - il comporte un élément (37) qui dérive les signaux temporels pour l'acceptation des mots de donnée, à partir des signaux de rythme de l'autocommutateur;
   - pour chacun des n voies qui participent à une liaison à large bande, il existe une mémoire de coordination de trame (FAM1 ... FAMn), ayant une partie de mémoire de données (RAM1 ... RAMn) pour recevoir les données, et une partie de mémoire associative (CAM1 ... CAMn) pour recevoir le numéro d'identification de trame, représente une adresse associative permettant d'identifier une trame;
   - il comporte un compteur de trame de sortie (34) qui adresse la partie de mémoire associative (CAM1 ... CAMn) afin d'obtenir à sa sortie une adresse associative pour la partie de mémoire de données (RAM1 ... RAMn);
   - une unité de commande (35) est associée aux mémoires de coordination de trame (FAM1 ... FAMn) au moyen de laquelle on détermine si toutes les mémoires de coordination de trame (FAM1 ... FAMn) possèdent des données comportant le numéro d'identification de trame concerné; et
   - il comporte un registre de sortie (36) qui est autorisé, à partir de l'unité de commande (35), à réaliser un réassemblage, à partir des données contenues dans les parties de mémoire de données (RAM1 ... RAMn), des mots de données à large bande, associés aux numéros respectifs d'identification de trame.

22. Module de sortie selon la revendication 21, caractérisé en ce que les mémoires de coordination de trame (FAM1 ... FAMn) comportent des mémoires pour la mémorisation de données, à écriture et à lecture vives ou à accès aléatoire (RAM1 ... RAMn), et des mémoires associatives (CAM1 ... CAMn) pour la mémorisation de numéros d'identification de trame.

23. Module de sortie selon la revendication 21 ou 22, caractérisé en ce qu'il comporte un compteur de trame d'entrée (33) qui fournit les adresses d'écriture pour les mémoires de coordination de trame (FAM1 ... FAMn), et en ce qu'il comporte un élément (37) qui applique des commandes d'écriture aux mémoires de coordination de trame (FAM1 ... FAMn), afin de stocker des données venant du réseau de connexion (10) dans les mémoires de coordination de trame (FAM1 ... FAMn).

24. Module de sortie selon l'une quelconque des revendications 21 à 23, caractérisé en ce qu'il comporte une unité logique (56) qui est en liaison avec la partie de mémoire associative (CAM1 ... CAMn) et qui détermine si toutes les mémoires de coordination de trame (FAM1 ... FAMn) contiennent des données valables et qui émet, en conséquence, un signal de commande, et en ce que l'unité de commande (35) qui est en liaison avec le compteur de trame de sortie (34) réalise une incrémentation du compteur de trame de sortie (34) dans le cas où il n'y a pas partout d'indication de données valables, et en ce que de, cette manière, le compteur de trame de sortie (34) fournit une adresse de début pour la mémoire de coordination de trame (FAM1 .... FAMn) afin de la synchroniser de nouveau.

25. Module de sortie selon l'une quelconque des revendications 21 à 24, caractérisé en ce qu'un mot système est composé de 16 bits et possède le format de bit F, E, D, C, B, A, 9, 8, 7, 6, 5, 4, 3, 2, 1, 0, en ce que les données sont contenues dans les bits C, B, A, 9, 8, 7, 6 et 5 et en ce que le numéro d'identification de trame est contenu dans les bits 4, 3, 2 et 1.

26. Module de sortie selon la revendication 25, caractérisé en ce que 32 desdits mots (mots système) constituent une trame.

27. Module de sortie selon l'une quelconque des revendications 21 à 26, caractérisé en ce que n est un entier compris entre 2 et 30 et en ce que la largeur totale de bande est égale à n fois la largeur de bande d'une voie à bande étroite.

FIG. 1

FIG. 2

Senke

Vertauschte Ausgabe

Richtige Ausgabe

Quelle

Zeit

| hn-1 | $l_{n-1}$ |
| hn | $l_n$ |
| hn+1 | $l_{n+1}$ |

Wn(T)

| hn | $l_{n+1}$ |
| hn-1 | $l_n$ |
| hn-2 | $l_{n-1}$ |

| hn+1 | $l_{n+1}$ |
| hn | $l_n$ |
| hn-1 | $l_{n-1}$ |

Zeit

Wn(R)

Wn(R)

P1, T1

P2, T2

Gruppe A

Gruppe B

FIG. 3

EP 0 156 339 B1

# FIG. 4

EP 0 156 339 B1

FIG. 5

FIG. 6

C4006L

FRAMEL

KANAL30 — KANAL 31 — KANAL 0

PCMIN | 3 | 2 | 1 | 0 | F | E | D | C | B | A | 9 | 8 | 7 | 6 | 5 | 4 | 3 | 2 | 1 | 0 | F | E | D | C | B | A | 9 | 8 | 7 | 6 | 5 | 4 | 3 | 2 | 1 | 0 |

LOAD

*nur für FAM30*  *nur für FAM31*

WRITE

EP 0 156 339 B1

# FIG. 7

EP 0 156 339 B1

FIG. 8

FIG. 9

# FIG. 10

EP 0 156 339 B1

C4096L $V_H$ $V_L$

LOAD + $V_H$ $V_L$

$t_{DCM}$

MODE + $V_H$ $V_L$

MATCH AND AD
ARE LATCHED ON MODE LOW

+MM

MATCH + $V_H$ $V_L$

$t_{MD}$

AD + $V_H$ $V_L$

H = HIGH
L = LOW

FIG. II

DATA BUS $V_H-$

(AD) + $V_L-$

$t_{DD}$      $t_Z$

DE - $V_H-$
     $V_L-$

FIG. 13

| 0 | 0 | | IDLE |
| 0 | 1 | | SELECT |
| 1 | 0 | | ESCAPE |
| 1 | 1 | | SPATA |

| F | E | D | C | B | A | 9 | 8 | 7 | 6 | 5 | 4 | 3 | 2 | 1 | 0 |
|---|---|---|---|---|---|---|---|---|---|---|---|---|---|---|---|
| 1 | 1 | X | $D_7$ | $D_6$ | $D_5$ | $D_4$ | $D_3$ | $D_2$ | $D_1$ | $D_0$ | $T_3$ | $T_2$ | $T_1$ | $T_0$ | P |

## FIG. 12

| PARAMETER | MIN | MAX |
|---|---|---|
| tAD: DELAY AA INPUT STABLE TO AD OUTPUT STABLE | | 220ns |
| tAM: DELAY AA INPUT STABLE TO MATCH OUTPUT STABLE | | 200ns |
| tDCM: C4096L LOW TO MODE HIGH | | 30ns |
| tDD: DE LOW TO AD OUTPUT STABLE | | 400ns |
| tDL: C4096L LOW TO LOAD HIGH | 0 | 30ns |
| tf: FALL TIME C4096L | | 10ns |
| tH: HOLD TIME PCM IN FROM C4096L LOW | 20ns | |
| tHL: HOLD TIME LOAD HIGH FROM C4096L LOW | 0 | |
| tMD: MODE HIGH TO AD STABLE | | 180ns |
| tMM: MODE HIGH TO MATCH STABLE | | 180ns |
| tr: RISE TIME C4096L | | 10ns |
| tsu: SETUP TIME PCMIN BEFORE C4096L | 30ns | |
| tz: RELEASE TIME DA ACTIVE TO "OFF" (Hi-Z) | | 100ns |

FIG. 14

EP 0 156 339 B1

# FIG. I5A

# FIG. I5B